# EUROPÄISCHE PATENTANMELDUNG

(11) **EP 4 629 078 A1**
(43) Veröffentlichungstag der Anmeldung: **08.10.2025**
(21) Anmeldenummer: 24181075.3
(22) Anmeldetag: 10.06.2024
(51) Int. Cl.: G06F 9/50, G06F 9/54, H04L 67/104

(54) **VOLLAUTOMATISIERTES HERSTELLEN MINDESTENS EINES KOMMUNIKATIONSKANALS ZU MINDESTENS EINEM MOBILEN ENDGERÄT**

(30) Priorität: 02.04.2024 EP 24168019
(71) Anmelder: Kiessig, Rene, 04277 Leipzig (DE)
(72) Erfinder: Kiessig, Rene, 04277 Leipzig (DE)
(74) Vertreter: Reich, Jochen

(57) **Zusammenfassung**

Die Erfindung betrifft ein vollautomatisiertes System und Verfahren zur Konfiguration mobiler Endgeräte, das fortgeschrittene bildgebende Sensoren, geolokationsbasierte Daten, maschinelles Lernen und gemäß einem Aspekt der vorliegenden Erfindung künstliche Intelligenz nutzt, um eine effiziente und präzise Einrichtung von Kommunikationskanälen zu ermöglichen. Dies umfasst die automatische Erfassung und Auswahl potenzieller Kommunikationspartner basierend auf Voreinstellungen und Umgebungsparametern. Die Erfindung fällt in den Bereich der mobilen Kommunikationstechnologie, speziell der Entwicklung von automatisierten Systemen zur Erleichterung von Kommunikationsprozessen unter Verwendung von integrierten Sensoren und Kl-Technologien. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

## Beschreibung

Die Erfindung betrifft ein vollautomatisiertes System und Verfahren zur Konfiguration mobiler Endgeräte, das fortgeschrittene bildgebende Sensoren, geolokationsbasierte Daten, maschinelles Lernen und gemäß einem Aspekt der vorliegenden Erfindung künstliche Intelligenz nutzt, um eine effiziente und präzise Einrichtung von Kommunikationskanälen zu ermöglichen. Dies umfasst die automatische Erfassung und Auswahl potenzieller Kommunikationspartner basierend auf Voreinstellungen und Umgebungsparametern. Die Erfindung fällt in den Bereich der mobilen Kommunikationstechnologie, speziell der Entwicklung von automatisierten Systemen zur Erleichterung von Kommunikationsprozessen unter Verwendung von integrierten Sensoren und Kl-Technologien. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

Bekannt sind unterschiedliche Verfahren, welche als Künstliche Intelligenz (KI) bzw. Artificial Intelligence (AI) zusammengefasst sind. Künstliche Intelligenz ist die Fähigkeit von Maschinen und Computern, Aufgaben zu erledigen, die normalerweise menschliche Intelligenz erfordern. Dazu gehören das Verstehen und Verarbeiten natürlicher Sprache, das Erkennen und Interpretieren von Mustern, das Treffen von Entscheidungen und das Lernen aus Erfahrungen. KI nutzt verschiedene Ansätze wie maschinelles Lernen, neuronale Netze und natürliche Sprachverarbeitung, um diese Fähigkeiten zu entwickeln und zu verbessern. Sie wird in vielen Bereichen eingesetzt, um komplexe Probleme zu lösen und effiziente, autonome Systeme zu schaffen, die menschenähnliche Fähigkeiten besitzen.

Bekannte Methoden zur Einrichtung von Kommunikationskanälen erfordern oft manuelle Eingaben und Anpassungen durch den Benutzer, was zeitaufwendig sein kann und zu Fehlern führen mag. Vorhandene Technologien nutzen nicht das volle Potenzial moderner Sensorik und Kl, um den Prozess zu automatisieren und zu optimieren.

Aus dem Stand der Technik sind Überwachungssysteme bekannt, welche beispielsweise Großveranstaltungen derart überwachen, dass Kameras auf bestimmte Bereiche, zum Beispiel eines Gebäudes, ausgerichtet sind. Hierbei werden Kameras an der Decke so angebracht, dass sie den zu überwachenden Bereich einsehen können. Somit wird also im Stand der Technik unabhängig von der Anzahl der Personen ein bestimmter Bereich überwacht, egal, wie viele Personen sich hier gerade befinden. Dieser uneingeschränkte Personenkreis liefert größere Datenmengen, wobei zugrunde gelegt wird, dass ausreichend Rechenkapazitäten zur Verfügung stehen. Gerade bei mobilen Endgeräten stehen diese Rechenkapazitäten typischerweise nicht zur Verfügung.

Weiter aus dem Stand der Technik ist es bekannt, aus einer Vielzahl von Objekten auf einem Bild einzelne Personen bzw. Objekte zu identifizieren. So können beispielsweise Personen in einer Datenbank hinterlegt werden. Von diesen Personen wird ein Foto angefertigt und sodann erfolgt ein Abgleich dieses Fotos mit der erfassten Datenmenge. Bei einer Übereinstimmung kann sodann eine Information ausgegeben werden, dass sich diese Person an einem bestimmten Ort befindet.

Oftmals verlangen bekannte Verfahren eine Benutzerinteraktion, was oftmals in zeitkritischen und sicherheitsrelevanten Anwendungen nicht möglich bzw. nachteilig ist. Zudem sind oftmals Sichtverhältnisse eingeschränkt. So kann es bei schlechter Sicht bzw. nachts zu Problemen bei der Bilderfassung kommen. Zudem reicht oftmals eine einzige Perspektive nicht aus, um eine Situation vollumfassend zu beurteilen können.

Die vorgenannten Probleme verschärfen sich dahingehend, dass typischerweise bei einer Bildverarbeitung eine Echtzeitanforderung besteht, d.h. also, dass aus subjektiver Sicht des Benutzers eine sofortige Verarbeitung stattfinden muss. Gerade bei einem Bewegen einer Kamera entstehen viele Bilddaten, welche sodann sofort verarbeitet werden müssen.

Es ist daher eine Aufgabe ein Verfahren zum vollautomatisierten Herstellen mindestens eines Kommunikationskanals vorzuschlagen, welches fehlerrobust ist und in zeitkritischen Anwendungen einen geeigneten Kommunikationskanal ohne menschliches Zutun aufbaut. Ferner ist es eine Aufgabe der vorliegenden Erfindung eine entsprechend eingerichtete Systemanordnung vorzuschlagen. Ferner ist es eine Aufgabe ein Computerprogrammprodukt mit Steuerbefehlen bereitzustellen, welche das Verfahren implementieren beziehungsweise die vorgeschlagene Vorrichtung und Anordnung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zum vollautomatisierten Herstellen mindestens eines Kommunikationskanals zu mindestens einem mobilen Endgerät vorgeschlagen, aufweisend ein stetiges Auslesen bildgebender Sensoren zum Erfassen einer Mehrzahl potentieller Kommunikationspartner, wobei die bildgebenden Sensoren jeweils von einer Mehrzahl von mobilen Endgeräten und einer Mehrzahl von stationären Endgeräten betrieben werden; ein Identifizieren mindestens eines abgespeicherten Verhaltensmusters mindestens eines potentiellen Kommunikationspartners mittels des stetigen Auslesens der bildgebenden Sensoren; und ein Herstellen jeweils eines Kommunikationskanals zu mindestens einem bestimmten Kommunikationspartner, falls das jeweils identifizierte Verhaltensmuster dieses Kommunikationspartners einem vorab definierten Verhaltensmuster entspricht.

Es wird ein Verfahren zum vollautomatisierten Einrichten mindestens eines Kommunikationskanals von einer Sendeeinheit zu mindestens einem mobilen Endgerät, also einem Mobiltelefon oder ein Fahrzeug, vorgeschlagen. Das mobile Endgerät ist dadurch bestimmt, dass dies nicht ortsfest ist. Somit können alle denkbaren Endgeräte wie Drohnen oder Roboter angesprochen werden. Bei dem Kommunikationskanal handelt es sich bevorzugt um eine Mobilfunkverbindung. Der Kommunikationskanal ermöglicht eine unidirektionale oder bidirektionale Kommunikation mit mindestens einer Sendeeinrichtung. Diese kann in Abhängigkeit des gezeigten Verhaltens des Kommunikationspartners Steuerbefehle an diesen übermitteln oder diesen warnen.

Ein stetiges Auslesen bildgebender Sensoren zum Erfassen einer Mehrzahl potentieller Kommunikationspartner kann derart erfolgen, dass Kameras in Echtzeit ausgelesen werden und zentral oder dezentral entsprechende Information verarbeitet wird. So kann ein Fahrzeug mehrere andere Verkehrsteilnehmer filmen und das Material an eine entfernte Einheit übermitteln. Die Kommunikationspartner können mittels Bildanalyse, zum Beispiel Pattern Matching, ermittelt werden. Diese können auch eine Information bereitstellen, dass sie eine Kommunikationsverbindung anbieten. Auch können diese mit optischen Merkmalen, wie ein QR Code, ausgestattet werden, welche eine potentielle Kommunikationsbereitschaft anzeigen.

Die bildgebenden Sensoren werden jeweils von einer Mehrzahl von mobilen Endgeräten und einer Mehrzahl von stationären Endgeräten betrieben, was derart erfolgen kann, dass mehrere Verkehrsteilnehmer jeweils eine oder mehrere Kameras betreiben. Zudem können an Verkehrsknotenpunkten stationäre Kameras installiert sein. So kann ein Fahrzeug ein oder zwei Kameras betreiben und die Bildinformation an eine zentrale Steuereinheit übermitteln. Diese steuert das Verfahren, wertet die Information aus und trifft Entscheidungen, welche Kommunikationskanäle hergestellt werden und welche Information so dann übermittelt wird. Ein Überwachungsposten kann auch mehrere Kameras betreiben und somit Bildinformation aus mehreren Perspektiven bereitstellen. Die bildgebenden Sensoren müssen nicht zwingend im menschlich sichtbaren Bereich arbeiten. Ein Auslesen bildgebender Sensoren kann also auch ein Wärmebild und/ oder ein Infrarotbild liefern.

Ein Identifizieren mindestens eines abgespeicherten Verhaltensmusters mindestens eines potentiellen Kommunikationspartners erfolgt durch das Vergleichen vorab definierter Verhaltensmuster und das Beobachten tatsächlicher Verhaltensmuster. Stimmt ein beobachtetes Verhaltensmuster mit einem vorbestimmten Grenzwert mit einem abgespeicherten Verhaltensmuster überein, so wird dies erkannt und das Verfahren bzw. eine oder mehrere zentrale und/ oder dezentrale Steuereinheiten erkennen dieses Verhaltensmuster. Beispielsweise wird auf einer Fahrbahn eine Soll-Trajektorie, also ein Fahrverlauf, mit einer Ist-Trajektorie verglichen und erkannt, dass es sich um eine gefährliche Fahrsituation handelt. Hier sind mehrere Fahrverläufe abgespeichert und es wird diejenige gewählt, der der tatsächliche Fahrverlauf am ähnlichsten ist. Somit kann der Fahrverlauf klassifiziert werden und es wird entschieden, ob mit diesem Verkehrsteilnehmer ein Kommunikationskanal aufgebaut wird. Somit kann in kritischen Situationen dem Fahrer eine Warnung übersendet werden, das Fahrzeug entfernt gesteuert werden oder ein Notruf gewählt werden. Somit kann bereits vor einem Unfall von zentralen und/ oder dezentralen Steuereinheiten Hilfe angefordert werden, da erkannt werden kann, dass das identifizierte Verhaltensmuster unausweichlich zu einem Unfall führen wird.

Es erfolgt also ein Herstellen jeweils eines Kommunikationskanals zu mindestens einem bestimmten Kommunikationspartner, falls das jeweils identifizierte Verhaltensmuster dieses Kommunikationspartners einem vorab definierten Verhaltensmuster entspricht bzw. zu einem gewissen Grad ähnlich ist. So können mehrere Fahrzeuge gewarnt oder ferngesteuert werden. Bei einer verteilten Produktion, in der Roboter kooperativ einen Arbeitsprozess erledigen, kann das Verhalten eines Roboters analysiert werden und sodann ein weiterer Roboter mittels des Kommunikationskanals auf einen folgenden Arbeitsschritt eingestellt werden.

Das Herstellen jeweils eines Kommunikationskanals zu mindestens einem bestimmten Kommunikationspartner erfolgt, falls das jeweils identifizierte Verhaltensmuster dieses Kommunikationspartners einem vorab definierten Verhaltensmuster entspricht, wobei das Verfahren auch iterativ abgespeichert werden kann und Verhaltensmuster erlernt werden können. Die Verhaltensmuster werden beobachtet und das Ergebnis abgespeichert. Führt zum Beispiel ein Verhaltensmuster mit überhöhter Geschwindigkeit zu einem unerwünschten Verhaltensmuster wie Totalausfall einiger Komponenten, so wird dies erkannt und zukünftigen Verkehrsteilnehmer vorab eine Warnung übersendet. Hierzu erfolgt also ein Klassifizieren von Verhaltensmustern und die Historie wird berücksichtigt. Somit können Verhaltensmuster abgespeichert werden, die zu unerwünschten Verhaltensmustern führen und es wird mindestens ein Kommunikationskanal erstellt.

Somit ist es vorteilhaft Verhaltensmuster vorab zu klassifizieren und aus der Historie zu erkennen bzgl. welcher Verhaltensmuster ein Kommunikationskanal aufgebaut werden muss. In Abhängigkeit dieser Klassifikation kann auch die Art des Kommunikationskanals gewählt werden und/ oder welche Informationen übermittelt werden. So kann ein Fahrer mittels einer Ausgabe am Display lediglich gewarnt werden oder es wird ein akustisches Signal über dessen Bordelektronik oder Mobiltelefon ausgegeben. In dringenden Fällen kann ein Kommunikationskanal mit der Fahrführung des Fahrzeugs aufgebaut werden. Somit lässt sich über diesen Kommunikationskanal eine Fahraktion, wie zum Beispiel ein Abbremsen, einleiten.

Der Vergrößerungsfaktor kann physisch an der Kamera eingestellt werden oder aber auch programmtechnisch simuliert werden. Weist die Hardware nicht über ein entsprechendes Objektiv auf, so kann auch virtuell ein Bildschirmausschnitt gewählt werden, der gezoomt d.h. vergrößert wird. Auch kann eine einfache Digitalkamera ohne Zoom - Objektiv bzw. eine Kamera ohne entsprechendem Objektiv derart betrieben werden, dass diese in normalen Betrieb nur einen Bildausschnitt verwendet. Somit kann auch virtuell der Bildschirmausschnitt vergrößert werden. Somit kann das Anpassen des Zoomfaktors bzw. Vergrößerungsfaktor auch programmtechnisch erreicht werden. Ein Anpassen des Vergrößerungsfaktors ist also je nach Anwendung ein Vergrößern oder ein Verkleinern des Bildausschnitts.

Das vorgeschlagene Verfahren konfiguriert das mobile Endgerät derart, dass die Kamera bzw. der bildgebende Sensor eingestellt wird. Bei dem mobilen Endgerät handelt es sich beispielsweise um ein Smartphone eines Benutzers der bei der Einrichtung eines Kommunikationskanals unterstützt wird. Dies erfolgt semi-automatisiert, da der Benutzer nicht aus einer vorgegebenen Liste, wie zum Beispiel einem Telefonbuch, auswählen muss, sondern vielmehr hält der Benutzer sein Endgerät in eine Menschenmenge und richtet somit auch die Kamera aus. Dem Benutzer werden sodann potentielle Kommunikationspartner angezeigt und er kann diese Kommunikationspartner dann einzelnen auswählen. Beispielsweise richtet der Benutzer seine Kamera auf eine Menschengruppe von 20 Personen aus. Hierbei ist es möglich, dass alle 20 Benutzer für den zu Grunde liegenden Service registriert sind. Sind lediglich 15 Benutzer für den vorgeschlagenen Dienst registriert, so erfolgt ein Einstellen des Vergrößerungsfaktors bzw. der Brennweite bzw. eines Zooms derart, dass die voreingestellte Anzahl potentieller Kommunikationspartner alleine, d.h. ausschließlich, angezeigt wird. Hat der Benutzer eingegeben, dass er fünf potentielle Kommunikationspartner sehen will, so wird der Zoom derart eingestellt, dass auf dem Bildschirm des Smartphones lediglich fünf Personen angezeigt werden. Diese fünf Personen können bei dem zugrunde liegenden Dienst registriert werden oder nicht. Potentiell können also fünf Personen eine Registrierungsinformation hinterlegt haben oder aber auch zum Beispiel drei Personen. Bei den registrierten Personen innerhalb der Gruppe von fünf Personen wird sodann angezeigt, mit welchen Kommunikationspartner man Kontakt aufnehmen kann. Aus den potentiellen Kommunikationspartnern werden sodann tatsächliche Kommunikationspartner, in dem der Benutzer einen tatsächlichen Kommunikationspartner auswählt.

Beispielsweise werden dem Benutzer innerhalb des herangezoomten Bildes drei potentielle Kommunikationspartner angezeigt und die Gesichter werden mittels eines Rechtecks dargestellt. Befinden sich auf dem Bild fünf Personen, sind jedoch nur drei registriert, so werden dem Benutzer insgesamt drei Rechtecke auf Gesichtern des jeweiligen potentiellen Kommunikationspartners angezeigt. Der Benutzer tippt sodann auf ein Rechteck und ein Kommunikationskanal wird eingerichtet bzw. hergestellt.

Die Brennweite und der Zoom sind zentrale Begriffe in der Fotografie und Optik, die eng miteinander verbunden sind. Die Brennweite bezeichnet den Abstand zwischen der optischen Mitte einer Linse oder eines Objektivs und dem Brennpunkt, also dem Punkt, an dem parallel einfallende Lichtstrahlen fokussiert werden. Dieser Abstand, gemessen in Millimetern, bestimmt den Bildwinkel und die Vergrößerung eines Objektivs. Eine kurze Brennweite, wie sie bei Weitwinkelobjektiven vorkommt, erfasst einen breiten Bildwinkel und eignet sich besonders für Landschaftsaufnahmen oder Innenräume. Eine lange Brennweite, charakteristisch für Teleobjektive, ermöglicht es, weit entfernte Motive nah heranzuholen, ideal für Sport- oder Tierfotografie.

Der Zoom hingegen bezieht sich auf die Fähigkeit eines Objektivs, die Brennweite zu verändern und dadurch den Bildausschnitt zu vergrößern oder zu verkleinern. Ein Zoomobjektiv kann seine Brennweite variieren, beispielsweise von 18 mm bis 55 mm, was es erlaubt, flexibel auf unterschiedliche Szenarien zu reagieren, ohne das Objektiv wechseln zu müssen. Es gibt sowohl optischen Zoom, der die Brennweite durch physisches Verschieben der Linsen ändert und dabei die Bildqualität erhält, als auch digitalen Zoom, der das Bild nachträglich durch Software vergrößert, was oft zu Qualitätsverlusten führt. Somit bestimmen Brennweite und Zoom gemeinsam, wie ein Motiv auf dem Foto dargestellt wird, und bieten vielfältige Möglichkeiten bei der Bildgestaltung.

Generell bezieht sich ein potentieller Kommunikationspartner auf ein elektrisches Gerät mit Kommunikationsschnittstelle. In optionalen Fällen kann aber auch der Besitzer eines Mobiltelefons oder ein Fahrzeugführer als potentieller Kommunikationspartner betrachtet werden.

Damit die Personen erfasst werden, erfolgt ein stetiges Auslesen mindestens eines bildgebenden Sensors zum Erfassen einer Mehrzahl potentieller Kommunikationspartner. Die Kamera des mobilen Endgeräts wird also aktiviert und erfasst stetig ein Bild. Hierbei ist es auch möglich mehrere Kameras zu verwenden, deren Bild kombiniert wird. Mittels einer Bilderkennung kann sodann festgestellt werden, wie viele Personen bzw. Objekte sich auf dem jeweiligen Bild befinden. Der Benutzer richtet die Kamera aus und erfasst somit unterschiedliche Anzahlen von Kommunikationspartnern. Diese sind in diesem Schritt noch potentielle Kommunikationspartner. Das Bild der Kamera ist also eine stetige Abfolge von Einzelbildern, die analysiert wird.

Wird die Anzahl potentieller Kommunikationspartner angezeigt und bewegt der Benutzer sein mobiles Endgerät, so wird wieder in den Schritt des stetigen Auslesens verzweigt und es erfolgt erneut ein Einstellen des Bildausschnitts bzw. des Zoom - Faktors, des Vergrößerungsfaktors bzw. der Brennweite. Werden beispielsweise nur drei anstatt der gewünschten fünf potentiellen Kommunikationspartner angezeigt, so wird herausgezoomt, bis eine Anzahl von fünf potentiellen Kommunikationspartnern angezeigt wird.

Gemäß einem Aspekt der vorliegenden Erfindung werden die Verhaltensmuster in Abhängigkeit von Sensorperspektiven identifiziert. Dies hat den Vorteil, dass mindestens zwei Sensoren ausgelesen werden, was ein räumliches Bild schafft und somit die Genauigkeit des Verfahrens verbessert.

Gemäß einem weiteren Aspekt der vorliegenden Erfindung werden die Verhaltensmuster in Abhängigkeit von Sensorperspektiven mindestens eines mobilen Endgeräts und mindestens eines stationären Endgeräts identifiziert. Dies hat den Vorteil, dass nicht nur unterschiedliche Perspektiven auf die gleiche Sicht möglich sind, sondern generell können auch Bildinformationen miteinander kombiniert werden. Können Fahrzeuge ihre Bilddaten mit Daten einer stationären, höher gestellten Kamera abgleichen und es erfolgt eine großräumigere Aufklärung mit unterschiedlichen Blickwinkeln und Kamerapositionen.

Gemäß einem weiteren Aspekt der vorliegenden Erfindung wird eine Brennweite und/ oder eine Sensorauflösung mindestens eines bildgebenden Sensors in Abhängigkeit einer Sensorauflösung und/ oder einer identifizierten Anzahl von Kommunikationspartner eingestellt. Dies hat den Vorteil, dass bei zu geringerer Kameraauflösung eine höhere Auflösung gewählt werden kann und/ oder ein Zoomen erfolgen kann. Ist das Einstellen der Sensorauflösung nicht möglich so kann ein anderer Sensor gewählt werden. Dieser kann vom gleichen Endgerät oder einem anderen Endgerät betrieben werden. Ferner wird sichergestellt, dass die Anzahl von Kommunikationspartnern ausreichend genau erfasst wird. Bei größerer Anzahl von Kommunikationspartner ist es notwendig eine hochauflösende Kamera bzw. einen Sensor zu wählen oder die Brennweite entsprechend einzustellen. Somit wird sichergestellt, dass die Anzahl von Kommunikationspartnern verlässlich erfasst wird.

Gemäß einem weiteren Aspekt der vorliegenden Erfindung wird die Auflösung eines ersten Sensors ausgelesen und bei Abweichen eines abgespeicherten Sollwerts alternativ oder additiv ein zweiter Sensor verwendet. Dies hat den Vorteil, dass die Sensoren aus einem oder mehrerer Endgeräte kollektiv zusammenarbeiten und gemeinsam die benötigte Bildinformation bereitstellen. So können zum Beispiel Bilder überlagert und/ oder nachskaliert werden.

Gemäß einem weiteren Aspekt der vorliegenden Erfindung werden die Verhaltensmuster in Abhängigkeit mehrerer bildgebender Sensoren, mindestens eines Ortssensors, mindestens eines Luftdrucksensors und/ oder eines Umgebungssensors analysiert. Dies hat den Vorteil, dass Verhaltensmuster in Abhängigkeit der Örtlichkeit variieren und dies entsprechend berücksichtigt werden kann. So kann bei einer bestimmten Temperatur oder Höhenlage ein Verhaltensmuster variieren und die gegeben Umstände hierzu können berücksichtigt werden. Herrscht zum Beispiel Glätte ist ein Fahrverhalten anders zu bewerten als bei freier Straße. Ferner können sich Drohnen bei Regen anders verhalten als bei regenlosem Wetter. Ferner besteht ggf. gesteigerter Kommunikationsbedarf in der Dunkelheit und ein Verhalten ist hier kritischer zu begutachten als bei freier Sicht.

Gemäß einem weiteren Aspekt der vorliegenden Erfindung umfasst ein Verhaltensmuster eine abgespeicherte Trajektorie, eine Geschwindigkeit, eine Bewegung mindestens einer Komponente, eine Aktion mindestens einer Komponente, eine Geschwindigkeitsveränderung, eine Höhenveränderung, eine Lageveränderung, ein elektrisches Signal, eine physische Veränderung mindestens einer Komponente und/ oder eine Verhaltensinformation. Dies hat den Vorteil, dass alle möglichen Verhalten abgebildet werden können und genau analysiert werden kann wie sich ein potentieller Kommunikationspartner verhält. Hierbei können alle Umgebungsvariablen berücksichtigt werden.

Gemäß einem weiteren Aspekt der vorliegenden Erfindung wird in Abhängigkeit eines identifizierten Verhaltensmusters eine Kommunikationskanal ausgewählt. Dies hat den Vorteil, dass in Abhängigkeit der erkannten Situation bzw. des Verhaltensmusters auch Charakteristika des Kommunikationskanals ausgewählt werden können. So können Verhaltensmuster einen schnellen Aufbau der Kommunikation motivieren und andere einen besonders sicheren Kommunikationskanal erfordern. So kann bei zeitkritischen Verhaltensmustern auf einen Verbindungsaufbau verzichtet werden. Hier ist ein Aushandeln eines Protokolls und von Übertragungsparametern nicht notwendig, sondern es wird einfach ein Signal über einen Kommunikationskanal gesendet. Somit ist in diesem Beispiel das Übersenden einer Information über einen möglichen Kommunikationskanal gleich zu stellen mit dem Herstellen eines Kommunikationskanals. Das Herstellen des Kommunikationskanals erfolgt also implizit durch die Nachrichtenübermittlung. Ist das Verhaltensmuster nicht zeitkritisch so kann ein Verbindungsaufbau, zum Beispiel mit Hand Shake und Aushandeln von Verbindungsparametern erfolgen. Außerdem kann ein verschlüsselter Kommunikationskanal gewählt werden, wenn das Verhaltensmuster in einer sicherheitskritischen Umgebung ausgeführt wird. So können zum Beispiel Industrieroboter mittels eines gesicherten bzw. verschlüsselten Kommunikationskanals angesteuert werden. Warnmeldungen und spontane Echtzeitsteuerungen werden über einen schnellen Kommunikationskanal abgewickelt.

Gemäß einem weiteren Aspekt der vorliegenden Erfindung wird vorab mindestens ein Kommunikationskanal abgespeichert, der mittels einer Sendeeinheit mit dem mindestens einen potentiellen Kommunikationspartner hergestellt werden kann. Dies hat den Vorteil, dass vorab Parameter hinterlegt werden können, die eine Kommunikationsaufnahme und somit das Herstellen des Kommunikationskanals ermöglichen. Dies kann durch eine vorab erfolgte Registrierung erfolgen. Der Kommunikationskanal kann zum Beispiel über das Telekommunikationsnetz erfolgen, wozu entsprechende Verbindungsparameter hinterlegt werden. Die Parameter beschreiben die einzelnen Kanäle und wie die Verbindung aufgebaut werden kann. Somit sind zum Beispiel Netzwerkadressen oder Kennungen hinterlegt mitsamt Parametern wie zum Beispiel ein Kommunikationskanal mittels Bluetooth, WLAN usw. herzustellen ist.

Gemäß einem weiteren Aspekt der vorliegenden Erfindung werden mehrere Verhaltensmuster in ihrer Gesamtheit identifiziert. Dies hat den Vorteil, dass erkannt werden kann, ob die Verhaltensmuster nicht nur einzeln, sondern kollektiv ein Herstellen eines Kommunikationskanals erforderlich macht. Zeigt ein Verhaltensmuster, dass sich ein Fahrzeug entlang einer Straße bewegt ist dies alleine oftmals unkritisch. Entsteht jedoch ein Gegenverkehr so muss ggf. ein Kommunikationskanal aufgebaut werden. Somit wird auch kollektiv anhand der Verhaltensmuster entschieden zu welchen der potentiellen Kommunikationspartner tatsächlich ein Kommunikationskanal hergestellt werden muss.

Gemäß einem weiteren Aspekt der vorliegenden Erfindung liegen die Kommunikationspartner als mobile Endgeräte vor. Dies hat den Vorteil, dass ein Kommunikationskanal von bzw. zu nicht ortsfesten Geräten wie Mobiltelefone, Drohnen, Fahrzeuge, Roboter usw. hergestellt werden kann.

Gemäß einem weiteren Aspekt der vorliegenden Erfindung betreibt jedes mobile Endgerät und jedes stationäre Endgerät jeweils mindestens einen Sensor. Dies hat den Vorteil, dass die Sensoren über die Geräte verteilt werden und somit ein Zusammenwirken ermöglich wird. Jedes an der Ausführung des Verfahrens beteiligte Gerät verfügt somit über einen oder mehrere Sensoren.

Gemäß einem weiteren Aspekt der vorliegenden Erfindung wird der Vergrößerungsfaktor bzw. Zoomfaktor derart eingestellt, dass die ausgelesenen potentiellen Kommunikationspartner genau der Anzahl der voreingestellten Anzahl potentieller Kommunikationspartner entsprechen. Dies hat den Vorteil, dass die Kamera bezüglich des Zooms so eingestellt wird, dass das erfasste Bild verkleinert bzw. vergrößert wird, solange bis die vorgegebene Anzahl an Kommunikationspartner in dem Bild vorhanden ist. Somit wird also die Kamera selbsttätig eingestellt.

Gemäß einem weiteren Aspekt der vorliegenden Erfindung weist eine Registrierungsinformation mindestens ein Bild, mindestens ein Muster, eine Information eines Nummernschilds, ein Gesichtsmerkmal, biometrische Daten und/oder mindestens eine visuelle Benutzererkennung auf. Dies hat den Vorteil, dass ein Abgleich der vorhandenen Kommunikationspartner mit einem hinterlegten Bild erfolgen kann. Bei einer ausreichenden Übereinstimmung wird sodann angenommen, dass sich die Person auf dem hinterlegten Bild tatsächlich in dem erfassten Echtzeitbild befindet. Handelt es sich bei einem Kommunikationspartner nicht um einen Menschen, so kann auch ein Muster hinterlegt werden, welches mittels Bilderkennung besonders einfach erfasst werden kann. Auch können Teile oder ein komplettes Nummernschild optisch hinterlegt werden, so dass hierzu ein Auto als Kommunikationspartner ausgewählt werden kann. Möchte man beispielsweise einen Warnhinweis übersenden, so kann ein Fahrer als Registrierungsinformation textuell seine Nummernschildinformation eingeben und sodann können weitere Fahrer genau dieses Auto auswählen und der Fahrer dieses Autos erhält einen Warnhinweis auf seinem Display.

Gemäß am weiteren Aspekt der vorliegenden Erfindung umfasst die Mehrzahl an Kommunikationskanälen einen Audiokanal, einen Videokanal und/oder einen textuellen Kommunikationskanal. Dies hat den Vorteil, dass der Benutzer aus mehreren Formaten auswählen kann und somit den geeigneten Kommunikationskanal einstellen kann. Bei einem Kommunikationskanal kann es sich um ein textuelles Gespräch, also einen Chat, oder einen audiovisuellen Nachrichtenaustausch handeln.

Gemäß einem weiteren Aspekt der vorliegenden Erfindung erfolgt das Erfassen der Kommunikationspartner in Abhängigkeit einer hinterlegten Registrierungsinformation, einer hinterlegten Bildinformation, in Abhängigkeit eines ausgelesenen Positionssensors, in Abhängigkeit eines Höhenmessers und/oder in Abhängigkeit eines Luftdrucksensors. Dies hat den Vorteil, dass nur diejenigen Kommunikationspartner erreicht werden können, welche auch mittels der Registrierungsinformation registriert sind. Sodann kann mittels Gesichtserkennung bzw. Pattern Matching eine Bildinformation mit dem tatsächlichen Bild der Kamera verglichen werden und so kann ein Benutzer identifiziert werden. Darüber hinaus ist es auch möglich, eine Position anzugeben, an der sich der Kommunikationspartner befindet. Hierbei sollen räumliche Einschränkungen durchgeführt werden, die beispielsweise einen Umkreis definieren. Die geographische Position des Benutzers kann auch mittels eines Höhenmessers und eines Luftdrucksensors erfolgen, wobei der Luftdrucksensor wiederum eine Information bezüglich der Höhe darstellt. Somit ist es beispielsweise möglich geographische Regionen einzuschränken, in denen sich die Kommunikationspartner befinden. Beispielsweise können nur Kommunikationspartner im Umkreis von 15 Meter oder einem größeren Bereich relevant sein.

Gemäß am weiteren Aspekt der vorliegenden Erfindung wird die voreingestellte Anzahl potentieller Kommunikationspartner in Abhängigkeit einer Auflösung und/oder einer prozentualen Bildschirmbelegung der Wiedergabeeinheit relativ spezifiziert. Dies hat den Vorteil, dass pro Auflösung des mobilen Endgeräts angegeben werden kann, wie viele Kommunikationspartner anzuzeigen sind. Dies ermöglicht es, dass genug Fläche bleibt, um den Kommunikationspartner derart anzuzeigen, dass der Benutzer ihn auch tatsächlich identifizieren und auswählen kann. So kann eine Liste erstellt werden, welche unterschiedliche mögliche Auflösungen des Bildschirms und/oder der Kamera anzeigt und sodann wird jeder Auflösung ein Wert zugeordnet, welche die Anzahl potentieller Kommunikationspartner beschreibt. Beispielsweise können bei einer Standardauflösung des Bildschirms fünf Kommunikationspartner angezeigt werden. Ist die Auflösung höher, so kann auch eine Anzahl von sieben Konditionspartnern möglich sein. Somit wird die Kamera derart eingestellt, dass sie auch den Bildschirm berücksichtigt und sodann wird immer eine geeignete Anzahl an Kommunikationspartner angezeigt. Die prozentuale Bildschirmbelegung kann auch derart definiert werden, dass beispielsweise angegeben wird, dass 15 % des Bildschirms für einen Kommunikationspartner reserviert werden. Da nach 90 % keine 15 % mehr möglich sind, wird eben nur 90 % der Bildschirmbelegung genutzt und es werden sechs Kommunikationspartner angezeigt. Es können auch 20 % der Bildschirmbelegung definiert werden und so werden auf dem gesamten Bildschirm lediglich fünf Kommunikationspartner angezeigt. Die Kamera wird derart eingestellt, dass die Brennweite bzw. der Zoom genau diese Anzahl an Kommunikationspartnern erfasst.

Gemäß einem weiteren Aspekt der vorliegenden Erfindung liegt das mobile Endgerät des Benutzers als ein Telefon, eine elektronische Brille mit Benutzerschnittstelle und/oder ein Head-up-Display vor. Dies hat den Vorteil, dass unterschiedliche Hardware verwendet werden kann. So kann beispielsweise ein Benutzer eine elektronische Brille verwenden, welche Informationen in das Brillenglas einblenden kann. So erhält der Benutzer unterschiedliche Information bezüglich der Kommunikationspartner, welche ihn umgeben. Mittels einer weiteren Information kann dargestellt werden, welche Kommunikationspartner registriert sind. Darüber hinaus ist es oftmals möglich in ein Display innerhalb einer Brille ein Kamerabild einzublenden, welches sodann die Kommunikationspartner in der gewünschten Anzahl heran zoomt bzw. heraus zoomt.

Gemäß einem weiteren Aspekt der vorliegenden Erfindung wird der Kommunikationskanal unter Verwendung von Bluetooth, WLAN, einer Luftschnittstelle eines Mobilfunknetzes, einer Punkt zu Punkt Verbindung und/oder einer Telefonverbindung hergestellt. Dies hat den Vorteil, dass unterschiedliche Kommunikationstechniken Einsatz finden können und bei einem Ausfall einer ersten Kommunikationstechnik eine zweite Kommunikationstechnik verwendet wird. Auch können diese Techniken priorisiert werden und bei einem Ausfall einer verwendeten hoch priorisierten Technik, wird eine nachrangige Technik automatisch hinzugeschaltet.

Die Erfindung verwendet gemäß einem Aspekt der vorliegenden Erfindung ein Netzwerk aus bildgebenden Sensoren, GPS, Luftdruckmesser und weiteren Umgebungssensoren, um die Umgebung des Benutzers vollständig zu erfassen. Durch maschinelles Lernen und Algorithmen der künstlichen Intelligenz werden potenzielle Kommunikationspartner nicht nur erkannt, sondern auch deren Verfügbarkeit und Kompatibilität in Echtzeit bewertet. Die Erfindung passt automatisch den Zoom- und Fokus der Kamera an, um die optimale Anzahl von Kommunikationspartnern gemäß der Benutzereinstellung zu zeigen.

Vorgeschlagen wird ein vollautomatisches Verfahren zur Einrichtung von Kommunikationskanälen das ein mobiles Endgerät verwendet, welches mindestens einen bildgebenden Sensor zur Erfassung des Umgebungsbildes verwendet, einen Algorithmus nutzt, der auf maschinellem Lernen basiert, um potenzielle Kommunikationspartner zu identifizieren und auszuwählen, eine adaptive Zoomsteuerung implementiert, die basierend auf der Anzahl und Position der identifizierten Kommunikationspartner automatisch angepasst wird.

Gemäß einem Aspekt der vorliegenden Erfindung umfasst das System zur Durchführung des Verfahrens eine Datenbank, die Benutzerprofile und deren Präferenzen speichert, eine Kommunikationseinheit, die verschiedene Kommunikationskanäle wie Audio, Video und Text unterstützt und eine Benutzerschnittstelle, die auf natürliche Sprachverarbeitung und berührungsempfindliche Eingabe reagiert.

Es werden verschiedene Szenarien beschrieben, in denen das System unter verschiedenen Umweltbedingungen und Benutzerpräferenzen effizient funktioniert. Dazu gehören Anwendungen in öffentlichen Bereichen, bei Veranstaltungen und in privaten Settings. Verwendet wird gemäß einem Aspekt der vorliegenden Erfindung eine Integration mit Augmented-Reality-Technologien zur visuellen Darstellung von Kommunikationspartnern.

Gemäß einem Aspekt der vorliegenden Erfindung erfolgt eine Nutzung von Blockchain-Technologie zur sicheren Speicherung und Verifizierung von Benutzerdaten und Kommunikationsprotokollen. Das vorgeschlagene System kann in einer Vielzahl von Umgebungen und Situationen eingesetzt werden, darunter geschäftliche Besprechungen, soziale Veranstaltungen und Notfallsituationen, in denen schnelle und effiziente Kommunikation erforderlich ist. Durch die Nutzung fortschrittlicher Technologien wie KI und maschinellem Lernen kann das System proaktiv die Bedürfnisse des Benutzers antizipieren und die Kommunikation entsprechend anpassen. Die Integration von Augmented-Reality ermöglicht eine intuitive und visuell angereicherte Interaktion, die über traditionelle Kommunikationsmittel hinausgeht.

Gemäß einem Aspekt der vorliegenden Erfindung bestehen folgende Vorteile:
- Effizienz: Automatisierung des Prozesses reduziert die Zeit, die benötigt wird, um Verbindungen herzustellen.
- Benutzerfreundlichkeit: Intuitive Benutzeroberflächen und natürliche Interaktionsmethoden steigern die Zugänglichkeit.
- Anpassungsfähigkeit: Das System passt sich dynamisch an die Bedürfnisse und Präferenzen des Benutzers sowie an die Umgebungsbedingungen an.
- Sicherheit: Die Nutzung von Blockchain für die Datenintegrität und das Datenschutzmanagement verbessert die Sicherheit der Benutzerdaten erheblich.

Diese Erfindung stellt eine bedeutende Verbesserung gegenüber existierenden Systemen dar, indem sie eine nahtlose, sichere und hochgradig personalisierte Kommunikationserfahrung bietet. Durch die Kombination modernster Technologien mit einer tiefen Integration von Benutzerdaten und Umgebungsparametern ermöglicht das System eine neue Ebene der Interaktion und Konnektivität, die für moderne Benutzeranforderungen notwendig ist. Gemäß einem Aspekt der vorliegenden Erfindung wird eine Methode geschaffen zur dynamischen Anpassung des Kommunikationsflusses, basierend auf der Echtzeitanalyse der Benutzerumgebung und -aktivität, einschließlich aber nicht beschränkt auf die Nutzung von Umgebungssensoren und Benutzerfeedback, mit einer Benutzerschnittstelle, die adaptiv auf die Präferenzen und die historische Nutzung des Benutzers reagiert, um eine maßgeschneiderte Kommunikationserfahrung zu bieten, und maschinelles Lernen zur Optimierung der Benutzerinteraktionen nutzt.

Folgende Anwendungsszenarien bestehen gemäß einem Aspekt der vorliegenden Erfindung:
- Mobile Kommunikation: Verbesserung von Smartphone- und Tablet-basierten Kommunikationssystemen.
- Automobilindustrie: Integration in Fahrzeuge zur Verbesserung der Kommunikation und Sicherheit durch automatisierte Systeme.
- Öffentliche Sicherheit: Einsatz in Notfallsituationen, wo schnelle und präzise Kommunikation lebensrettend sein kann.

Das System verwendet gemäß einem Aspekt der vorliegenden Erfindung eine Kombination aus mehreren Sensortypen (bildgebende Sensoren, GPS, Luftdruckmesser) und einer Klgesteuerten Software zur Analyse und Auswahl von Kommunikationspartnern in Echtzeit, was in dieser spezifischen Kombination und Anwendung bisher nicht bekannt ist. Es nutzt maschinelles Lernen, um aus den erfassten Daten Präferenzen zu lernen und die Kommunikationseinstellungen des Benutzers dynamisch anzupassen.

Das System löst das technische Problem, wie automatisierte Kommunikationskanäle effizient und ohne menschliches Zutun basierend auf der aktuellen Umgebung und Benutzerpräferenzen eingerichtet werden können. Es verbessert die Genauigkeit und Geschwindigkeit, mit der Kommunikationspartner identifiziert und ausgewählt werden, durch den Einsatz von fortschrittlicher Sensorik und Echtzeit-Datenverarbeitung.

Das System verwendet gemäß einem Aspekt der vorliegenden Erfindung fortschrittliche Algorithmen des maschinellen Lernens in Kombination mit einer Sensorik, um eine völlig neue Art der Kommunikationseinrichtung zu ermöglichen, die über den aktuellen Stand der Technik hinausgeht. Die Methode zur dynamischen Anpassung der Kommunikationseinstellungen basierend auf kontinuierlichen Umgebungs- und Präferenzanalysen ist nicht naheliegend für jemanden, der im relevanten technischen Feld tätig ist.

Die vorgeschlagene Erfindung kann folgende Merkmal einzeln oder in Kombination aufweisen:
Ein vollautomatisiertes System zur Herstellung und Verwaltung von Kommunikationskanälen, umfassend: ein oder mehrere Kommunikationsmodule, die in Geräten ausgewählt aus der Gruppe bestehend aus Drohnen, humanoiden Robotern, Industrierobotern, MR/AR-Brillen, autonomen Fahrzeugen und stationären Kamerasystemen in Smart Cities integriert sind; Sensorikmodule, die bildgebende Sensoren, akustische Sensoren, Umgebungslichtsensoren, und GPS-Module umfassen, welche kontinuierlich Umgebungsdaten erfassen; eine zentrale Verarbeitungseinheit, die mit einem maschinellen Lernmodul ausgestattet ist, welches darauf trainiert ist, basierend auf den erfassten Daten und voreingestellten Benutzerpräferenzen automatisch potenzielle Kommunikationspartner zu identifizieren und auszuwählen; eine Kommunikationssteuereinheit, konfiguriert zur Einrichtung von Kommunikationskanälen mittels einer Vielzahl von Kommunikationstechnologien, einschließlich aber nicht beschränkt auf WLAN, LTE, 5G, und zukünftige Kommunikationstechnologien; ein Benutzerinterface, das automatisch individuelle Anpassungen auf Basis der erfassten Benutzerinteraktionen und -präferenzen vornimmt, implementiert in den genannten Geräten.

Das beschriebene System, wobei die Sensorikmodule weiterhin mit einem Barometer und einem Luftdrucksensor ausgestattet sind, um die Höhe und Position der Geräte präzise zu bestimmen, insbesondere für die Anwendung in Drohnen und autonomen Fahrzeugen.

Das beschriebene System, wobei das maschinelle Lernmodul zusätzlich konfiguriert ist, um Lernalgorithmen für tiefes Lernen (Deep Learning) und Verstärkungslernen (Reinforcement Learning) zu verwenden, um die Entscheidungsfindung in Echtzeit unter komplexen Umgebungsbedingungen zu verbessern.

Das beschriebene System, das eine adaptive Zoomsteuerung in den bildgebenden Sensoren umfasst, um basierend auf der Anzahl und Distanz der identifizierten Kommunikationspartner das Sichtfeld dynamisch anzupassen.

Das beschriebene System, das erweiterte Realitätstechnologien nutzt, um Informationen über identifizierte Kommunikationspartner visuell in Echtzeit auf MR/AR-Brillen darzustellen.

Das beschriebene System, weiterhin konfiguriert zur Integration und Synchronisation mit städtischen Überwachungssystemen in Smart Cities, um öffentliche Sicherheit und individuelle Kommunikationsbedürfnisse zu unterstützen.

Das beschriebene System, wobei die Kommunikationssteuereinheit ferner in der Lage ist, automatisch den sichersten und effizientesten Kommunikationskanal zu wählen, basierend auf der aktuellen Netzwerkbelastung und vordefinierten Sicherheitsprotokollen.

Die vorgeschlagene Erfindung kann folgende Merkmal einzeln oder in Kombination aufweisen:
1. Sensordaten-Erfassung Sensoren: Bildgebende Sensoren (Kameras), akustische Sensoren (Mikrofone), Umgebungslichtsensoren, GPS-Module, Barometer und Luftdrucksensoren sind über das Gerät verteilt und erfassen kontinuierlich Daten über die Umgebung und die Position des Geräts. Diese Sensoren liefern Daten, die nicht nur die physische Umgebung abbilden, sondern auch spezifische Parameter wie Höhe und Position, die für die Navigation und Kontextualisierung in Echtzeit essentiell sind. Datenintegration: Alle erfassten Daten werden in Echtzeit an die zentrale Verarbeitungseinheit gesendet. Diese Daten umfassen visuelle Informationen, Audio, geographische Koordinaten, Höhendaten und Umgebungslichtverhältnisse.
2. Datenverarbeitung und Kommunikationspartner-Erkennung KI-gesteuerte Analyse: Ein maschinelles Lernmodul analysiert die eingehenden Datenströme, um potenzielle Kommunikationspartner zu identifizieren. Dieses Modul verwendet fortschrittliche Algorithmen des Deep Learnings und Reinforcement Learnings, um aus den Daten Muster zu erkennen und zu lernen. Die KI ist darauf trainiert, relevante Objekte und Personen innerhalb der Daten zu identifizieren und zu klassifizieren. Adaptive Algorithmen: Diese Algorithmen sind in der Lage, sich an verändernde Umgebungsbedingungen und Benutzerpräferenzen anzupassen, was eine kontinuierliche Optimierung der Identifikation und Auswahl von Kommunikationspartnern ermöglicht.
3. Kommunikationskanal-Einrichtung Kommunikationssteuereinheit: Nachdem potenzielle Kommunikationspartner identifiziert wurden, wählt die Kommunikationssteuereinheit automatisch die passenden Kommunikationskanäle aus. Die Einheit entscheidet basierend auf Faktoren wie Netzwerkbelastung, verfügbarer Bandbreite, Sicherheitsanforderungen und der geografischen Distanz zwischen den Kommunikationspartnern. Vielfältige Kommunikationsmodi: Das System unterstützt eine Vielzahl von Kommunikationsmodi, einschließlich Video, Audio und Text. Die Wahl des Modus hängt von den Präferenzen des Benutzers und den technischen Möglichkeiten des Gerätes ab.
4. Benutzerinteraktion und -anpassung MR/AR-Integration: Für Benutzer, die MR/AR-Brillen tragen, bietet das System eine visuelle Darstellung der identifizierten Kommunikationspartner direkt im Sichtfeld des Benutzers. Informationen zu den Partnern können überlagert und interaktive Elemente können zur einfachen Steuerung angeboten werden. Benutzerinterface: Die Benutzerschnittstelle ist hochgradig adaptiv und reagiert auf Sprachbefehle sowie Berührungen. Sie lernt aus den Interaktionen des Benutzers, um die Benutzererfahrung fortlaufend zu verbessern und zu personalisieren.
5. Synchronisation und Sicherheit Smart City Integration: In städtischen Umgebungen kann das System mit städtischen Überwachungssystemen synchronisiert werden, um öffentliche Sicherheit und effiziente Kommunikation zu unterstützen. Datensicherheit: Durch den Einsatz von fortschrittlichen Verschlüsselungstechniken und Blockchain-Technologien gewährleistet das System die Sicherheit und Integrität der übertragenen Daten.

In dem vollautomatisierten Verfahren zur Herstellung eines Kommunikationskanals, das hochmoderne Technologien nutzt, können verschiedene Kommunikations- und Informationsverarbeitungstechnologien integriert werden, um Effizienz, Sicherheit und Vielseitigkeit zu maximieren. Hier ist, wie Mobilfunk, Bluetooth, WLAN, Mesh-Systeme, Edge Computing, Blockchain-Technologie und Quantencomputing in einem solchen System genutzt werden können.

Bzgl. Mobilfunk bestehen gemäß einem Aspekt der vorliegenden Erfindung folgende Vorteile, Einsatzgebiete und Funktionen:
- Breite Abdeckung und Zuverlässigkeit: Mobilfunknetze bieten eine umfassende geografische Abdeckung und sind daher ideal für die Kommunikation zwischen Geräten, die sich in unterschiedlichen, auch entlegenen Gebieten befinden. Datendurchsatz und Latenz: Moderne Mobilfunktechnologien wie 5G ermöglichen einen hohen Datendurchsatz und geringe Latenz, was für Echtzeit-Kommunikationsanforderungen, wie sie in autonom fahrenden Fahrzeugen und Drohnen vorkommen, kritisch ist. Fallback-Option: Mobilfunk kann als Backup-Kommunikationskanal dienen, falls andere Verbindungen wie WLAN oder Bluetooth ausfallen oder nicht verfügbar sind.
- Bluetooth Einsatzgebiete und Funktionen: Nahbereichskommunikation: Bluetooth ist ideal für die Kommunikation auf kurze Distanzen, z. B. innerhalb eines Fahrzeugs oder zwischen tragbaren Geräten und Smartphones. Energieeffizienz: Bluetooth LE (Low Energy) ist besonders energieeffizient, was es für den Einsatz in mobilen und tragbaren Geräten wie MR/AR-Brillen und Wearables geeignet macht. Einfache Kopplung: Ermöglicht eine schnelle und sichere Kopplung zwischen Geräten zur Übertragung von Steuerbefehlen oder zur Einrichtung von Kommunikationsverbindungen.
- WLAN Einsatzgebiete und Funktionen: High-Speed-Datenübertragung: WLAN bietet hohe Datenübertragungsraten, die für datenintensive Anwendungen wie Videoübertragungen oder den Austausch großer Datensätze in Industrieanwendungen nützlich sind. Flexibilität: WLAN-Netzwerke können leicht skaliert und an unterschiedliche Anforderungen angepasst werden, was sie für den Einsatz in Smart Cities und großen industriellen Umgebungen ideal macht.
- Mesh-Systeme Einsatzgebiete und Funktionen: Robustheit und Selbstheilung: Mesh-Netzwerke sind in der Lage, sich selbst zu organisieren und zu optimieren. Bei Ausfall eines Knotens können Daten automatisch umgeleitet werden, was die Systemzuverlässigkeit erhöht. Erweiterbare Netzwerkabdeckung: Mesh-Systeme ermöglichen eine flexible Erweiterung der Netzwerkabdeckung über große Bereiche, was besonders in Smart Cities oder bei der Überwachung ausgedehnter industrieller Standorte von Vorteil ist.
- Edge Computing Einsatzgebiete und Funktionen: Datenverarbeitung am Rande des Netzwerks: Edge Computing ermöglicht die Verarbeitung von Daten direkt am Entstehungsort, was die Latenz minimiert und die Effizienz der Datennutzung verbessert. Unterstützung für Echtzeitanwendungen: Durch die schnelle Verarbeitung von Daten an der Edge können Entscheidungen in Echtzeit getroffen werden, was für autonome Systeme und robotergesteuerte Prozesse essentiell ist.
- Blockchain-Technologie Einsatzgebiete und Funktionen: Sicherheit und Transparenz: Durch die Nutzung von Blockchain kann das System sicherstellen, dass alle Kommunikationsvorgänge und Datentransaktionen verifizierbar und unveränderlich sind. Dezentralisierte Datenhaltung: Dies reduziert die Abhängigkeit von zentralen Servern und erhöht die Widerstandsfähigkeit gegenüber Ausfällen und Angriffen.
- Quantencomputing: Einsatzgebiete und Funktionen: Quantencomputing (Fortsetzung)Einsatzgebiete und Funktionen: Erweiterte Verschlüsselungsmethoden: Quantencomputing könnte zur Entwicklung von hochsicheren, quantenbasierten Verschlüsselungsmethoden verwendet werden, was die Sicherheit in Kommunikationsnetzwerken erheblich verbessert. Diese fortschrittlichen Algorithmen sind gegen herkömmliche und zukünftige Cyber-Angriffe immun, da sie auf den Prinzipien der Quantenmechanik basieren, die nicht mit traditionellen Mitteln unterlaufen werden können. Schnelle Datenverarbeitung: Quantencomputer bieten die Möglichkeit, komplexe Berechnungen, die für die Optimierung von Kommunikationsnetzen und das Routing in Mesh-Systemen benötigt werden, wesentlich schneller als herkömmliche Computer durchzuführen. Dies kann die Effizienz von Echtzeit-Datenanalysen und -entscheidungen, insbesondere in Umgebungen mit hohem Datenaufkommen wie Smart Cities oder bei autonomen Fahrzeugflotten, drastisch verbessern. Gesamtschau des Systems Das beschriebene vollautomatisierte System zur Herstellung eines Kommunikationskanals integriert eine Vielzahl von fortschrittlichen Technologien, um eine robuste, sichere und effiziente Kommunikationsinfrastruktur zu schaffen. Jede Technologie trägt spezifische Vorteile bei, die in Kombination eine umfassende Lösung für die Herausforderungen moderner Kommunikationssysteme bieten. Hier eine Zusammenfassung der technischen Wirkungsweise und des Ablaufs: Datenerfassung: Eine breite Palette von Sensoren sammelt kontinuierlich Daten über die Umgebung. Diese Daten werden durch Technologien wie Mobilfunk, WLAN und Bluetooth übertragen, wobei in speziellen Fällen auch Mesh-Netzwerke zur Erweiterung der Netzwerkabdeckung eingesetzt werden. Datenverarbeitung: Edge Computing wird genutzt, um Datenverarbeitungsaufgaben dezentral zu erledigen und die Latenz zu minimieren, was für Anwendungen wie autonomes Fahren oder Echtzeit-Reaktionen in der Robotik kritisch ist. Kommunikationssicherheit: Blockchain-Technologie bietet eine sichere Plattform für die Übertragung und Speicherung von Daten, indem sie Transparenz und Unveränderlichkeit gewährleistet, während Quantencomputing dazu beiträgt, die Kommunikation gegen zukünftige Bedrohungen abzusichern. Benutzerinteraktion: Adaptive Benutzerschnittstellen, unterstützt durch MR/AR-Technologien, ermöglichen eine nahtlose und intuitive Interaktion zwischen den Benutzern und dem System, wobei personalisierte Einstellungen und Präferenzen berücksichtigt werden. Schlussfolgerung Durch die Integration dieser Technologien kann das System nicht nur traditionelle Kommunikationsherausforderungen bewältigen, sondern auch innovative Lösungen für die zukünftige Entwicklung von Kommunikationstechnologien bieten. Es stellt sicher, dass Benutzer unabhängig von ihrer geografischen Lage oder den spezifischen Anforderungen ihrer Geräte effizient, sicher und in Echtzeit kommunizieren können. Dieses System setzt neue Maßstäbe für die Leistungsfähigkeit und Sicherheit in der Kommunikationstechnologie und bietet zahlreiche Anwendungsmöglichkeiten in einer Vielzahl von Industrien und Sektoren.

Die vollautomatisierte Version eines Verfahrens zur Herstellung eines Kommunikationskanals im Vergleich zur semi-automatisierten Variante bringt bedeutende technische Neuerungen und Effekte mit sich, die den Innovationsgrad, die Effizienz und die Benutzererfahrung erheblich steigern können. Hier sind einige Kernpunkte, die die Unterschiede zwischen beiden Ansätzen hervorheben: Erfindung und Technischer Effekt Vollständige Automatisierung der Prozesse: Erfindung: Das vollautomatisierte System eliminiert die Notwendigkeit manueller Eingriffe vollständig, indem es fortschrittliche Algorithmen und maschinelles Lernen nutzt, um die Auswahl und Einrichtung von Kommunikationskanälen eigenständig durchzuführen. Dies führt zu einer erheblichen Reduzierung der Zeit und des Aufwands für Benutzer, die Kommunikationskanäle einrichten möchten.

Das System kann dynamisch und in Echtzeit auf Veränderungen in der Umgebung und auf Benutzerpräferenzen reagieren, was die Reaktionsgeschwindigkeit und Effizienz verbessert. Intelligente Entscheidungsfindung basierend auf Umgebungsdaten und Benutzerpräferenzen. Durch die Integration von Umgebungssensoren und Präferenzprofilen kann das vollautomatisierte System komplexe Entscheidungen darüber treffen, welche Kommunikationskanäle und -partner am besten geeignet sind. Dies ermöglicht eine personalisierte und optimierte Kommunikationserfahrung, bei der das System die besten verfügbaren Netzwerke und Methoden für die Kommunikation in Echtzeit auswählt und anpasst, basierend auf der aktuellen Situation und den spezifischen Bedürfnissen des Benutzers. Das vollautomatisierte System integriert eine Vielzahl von Technologien (z. B. Mobilfunk, Bluetooth, WLAN, Mesh-Systeme, Edge Computing, Blockchain und Quantencomputing), die in semi-automatisierten Systemen typischerweise nicht in solch einem umfassenden Maß verwendet werden.

Diese Integration ermöglicht eine robustere und sicherere Kommunikationsplattform, die in der Lage ist, selbstständig die optimale Kommunikationsmethode auszuwählen und umzuschalten, was besonders in kritischen Anwendungen wie autonomem Fahren oder in Notfallsituationen von entscheidender Bedeutung ist. Es erfolgt gemäß einem Aspekt der vorliegenden Erfindung ein Einsatz von Kl und maschinellem Lernen zur Verhaltensvorhersage und -anpassung. Im Gegensatz zu semi-automatisierten Systemen, die oft statische oder begrenzt adaptive Algorithmen verwenden, nutzt das vollautomatisierte Verfahren fortschrittliche KI-Techniken, um kontinuierlich aus Interaktionen zu lernen und sein Verhalten entsprechend anzupassen. Dies führt zu einer stetigen Verbesserung der Systemleistung und -genauigkeit, wodurch die Benutzererfahrung über die Zeit personalisiert und optimiert wird. Diese Punkte verdeutlichen, dass die vollautomatisierte Version des Verfahrens zur Herstellung eines Kommunikationskanals signifikante technologische Fortschritte und Neuerungen gegenüber der semi-automatisierten Variante bietet. Sie verbessert nicht nur die Benutzerfreundlichkeit und Effizienz, sondern erweitert auch die Einsatzmöglichkeiten des Systems in verschiedenen industriellen und alltäglichen Anwendungsfeldern.

Das vollautomatisierte System zur Herstellung eines Kommunikationskanals, das fortschrittliche Technologien wie Kl, maschinelles Lernen, und verschiedene Kommunikations- und Sensortechnologien integriert, kann in einer Vielzahl von Szenarien und Branchen angewendet werden. Hier sind einige zusätzliche Anwendungsfälle, die über die bereits beschriebenen Bereiche wie Drohnentechnologie, humanoide Robotik, Industrierobotik, MR/AR-Brillen, autonomes Fahren und Smart Cities hinausgehen:
1. Gesundheitswesen Fernüberwachung und -diagnose: Das System könnte in medizinischen Geräten verwendet werden, um Patientendaten in Echtzeit zu überwachen und automatisch Kommunikationskanäle zu Spezialisten oder Notfalldiensten herzustellen, wenn Anomalien oder Notfälle erkannt werden. Operationsrobotik: In der robotergestützten Chirurgie könnte das System verwendet werden, um eine nahtlose Kommunikation zwischen chirurgischen Geräten und Überwachungssystemen zu gewährleisten, was die Sicherheit und Effektivität von Operationen erhöht.
2. Landwirtschaft Smart Farming: Automatisierte Systeme in der Landwirtschaft könnten das System nutzen, um Umweltdaten zu erfassen und auf dieser Grundlage die Kommunikation zwischen Bewässerungssystemen, Drohnen und Bodenanalysegeräten zu steuern, um die Ernteerträge zu optimieren und Ressourcen effizient zu verwalten.
3. Notfallmanagement und Katastrophenhilfe Koordinierung von Rettungseinsätzen: In Katastrophensituationen könnte das System die Kommunikation zwischen verschiedenen Rettungsdiensten automatisieren, um eine schnelle und effektive Reaktion zu gewährleisten. Das System könnte relevante Daten in Echtzeit erfassen und die Kommunikation zwischen Bodenpersonal, Drohnen, Rettungsfahrzeugen und Kontrollzentren optimieren.
4. Umweltüberwachung und -management Überwachung von Umweltbedingungen: Das System könnte in Sensornetzwerken eingesetzt werden, die Umweltdaten wie Luftqualität, Wasserqualität und Wildtierbewegungen überwachen. Automatisierte Kommunikationskanäle könnten dazu beitragen, Daten effizient zu aggregieren und bei Bedarf Warnmeldungen auszulösen.
5. Bildung und TrainingVirtuelle Lernumgebungen: In Bildungseinrichtungen könnte das System genutzt werden, um eine interaktive und reaktionsschnelle Lernumgebung zu schaffen, indem es Kommunikationskanäle zwischen Lehrern und Schülern oder innerhalb von Lerngruppen automatisch basierend auf dem Fortschritt und den Bedürfnissen der Schüler einrichtet.
6. Einzelhandel und Kundenbetreuung Automatisierter Kundensupport: Das System könnte in der Kundenbetreuung eingesetzt werden, um Kundenanfragen automatisch zu erkennen und auf die am besten geeigneten Supportkanäle (wie Chatbots, Videoanrufe oder direkte Mitarbeiterkommunikation) umzuleiten, basierend auf der Art der Anfrage und der Verfügbarkeit von Mitarbeitern.
7. Öffentliche Sicherheit und Überwachung Intelligentes Überwachungssystem: In städtischen Umgebungen könnte das System zur Unterstützung öffentlicher Sicherheitsinitiativen eingesetzt werden, indem es Überwachungskameras und andere Sensoren nutzt, um verdächtige Aktivitäten zu erkennen und automatisch die zuständigen Behörden zu informieren. Die Integration von Kameras in mobilen Endgeräten und stationären Kamerasystemen bietet zahlreiche Möglichkeiten für ein vollautomatisiertes Verfahren zur Herstellung eines Kommunikationskanals.

Gemäß einem Aspekt der vorliegenden Erfindung bestehen weitere Anwendungen, die die Vorteile dieser Technologie nutzen:
1. Verkehrsmanagement und -überwachung, Automatisierte Verkehrsanalyse: Mobile Endgeräte und stationäre Kameras können zur Überwachung und Analyse des Verkehrsflusses eingesetzt werden. Durch die automatische Erfassung von Verkehrsdaten wie Fahrzeugdichte, Geschwindigkeit und Verkehrsverstöße könnten Kommunikationskanäle zwischen Verkehrsleitzentralen und Fahrzeugen etabliert werden, um Verkehrsinformationen in Echtzeit zu übermitteln und Staus oder Unfälle effektiv zu managen. Smart Parking: Kameras in Smartphones und fest installierten Systemen können zur Identifikation freier Parkplätze genutzt werden. Das System könnte automatisch Kommunikationskanäle zu Fahrern öffnen, um sie zu den nächstgelegenen freien Parkplätzen zu leiten, was Zeit spart und den Verkehr reduziert.
2. Sicherheit und Überwachung Erweiterte Überwachungssysteme: In sensiblen Bereichen wie Flughäfen, Bahnhöfen oder großen öffentlichen Veranstaltungen könnten stationäre Kamerasysteme zur Gesichtserkennung und Verhaltensanalyse eingesetzt werden. Bei Verdacht auf kriminelle Aktivitäten könnte das System automatisch einen Kommunikationskanal zu Sicherheitspersonal öffnen und relevante Bilder oder Videos übermitteln. Persönliche Sicherheitsanwendungen: Mobile Endgeräte könnten so konfiguriert werden, dass sie bei Erkennung von potenziellen Gefahren (z. B. Angriff oder Diebstahl) automatisch Notrufdienste kontaktieren und Live-Videostreams übermitteln.
3. Gesundheitsüberwachung und -management Fernüberwachung von Patienten: Kameras in mobilen Endgeräten können genutzt werden, um Patienten mit chronischen Krankheiten oder ältere Personen zu überwachen. Das System könnte automatisch Gesundheitsdienstleister kontaktieren und Videofeeds senden, wenn es Anzeichen einer Verschlechterung des Zustands erkennt. Unterstützung für Menschen mit Behinderungen:
   Durch die Kombination von Kameratechnologie und KI könnten mobile Endgeräte automatisch Hilfe anfordern, wenn sie Stürze oder Notlagen von Menschen mit körperlichen Einschränkungen erkennen.
4. Retail und Kundeninteraktion Intelligente Kundenservice-Kioske: In Einzelhandelsumgebungen könnten stationäre Kamerasysteme Kunden erkennen und analysieren, die Hilfe benötigen. Das System könnte dann automatisch Kundendienstmitarbeiter informieren oder interaktive Displays ansteuern, um den Kunden direkt zu assistieren. Analyse des Kundenverhaltens: Kameras in mobilen Endgeräten oder stationären Systemen könnten genutzt werden, um das Einkaufsverhalten zu analysieren und personalisierte Angebote oder Empfehlungen automatisch über Kommunikationskanäle zu senden.
5. Bildung und Lernen Interaktive Lernumgebungen: Stationäre Kameras in Klassenzimmern könnten Lehrer- und Schülerinteraktionen erkennen und analysieren. Bei Bedarf könnte das System automatisch zusätzliche Lehrressourcen oder Unterstützung durch andere Lehrkräfte bereitstellen. Virtuelle Klassenzimmer: Für Fernunterricht könnten mobile Endgeräte verwendet werden, um eine interaktive und engagierte Lernerfahrung zu schaffen. Das System könnte automatisch zwischen Schülern und Lehrern kommunizieren, um Fragen zu klären oder zusätzliche Informationen bereitzustellen. Diese Anwendungen zeigen, wie die Integration von Kameras in mobilen und stationären Systemen in Verbindung mit einem vollautomatisierten Kommunikationskanal zahlreiche Möglichkeiten für Innovationen in verschiedenen Branchen bietet, von der öffentlichen Sicherheit über die Gesundheitsversorgung bis hin zum Einzelhandel und Bildungswesen.

1. Intelligentes Verkehrs- und Sicherheitsmanagement: Koordination zwischen mobilen und stationären Einheiten: Mobile Endgeräte in Fahrzeugen könnten mit stationären Kamerasystemen an Verkehrsknotenpunkten kommunizieren, um Verkehrsinformationen in Echtzeit zu übermitteln. Dies könnte die Verkehrsflüsse optimieren und Staus reduzieren, indem etwa Ampelschaltungen dynamisch angepasst werden. Unfallerkennung und Reaktion: Bei einem Verkehrsunfall könnten stationäre Kameras den Vorfall erkennen und sofort ein Signal an die mobilen Endgeräte von nahen Fahrern und Rettungsdiensten senden, um schnelle Hilfe und eine Umleitung des Verkehrs zu ermöglichen.
2. Event-Management und Sicherheitsüberwachung Crowd-Management bei Großveranstaltungen: Mobile Endgeräte der Sicherheitsmitarbeiter und stationäre Kamerasysteme arbeiten zusammen, um Menschenmengen zu überwachen. Das System könnte automatisch Kommunikationskanäle zwischen mobilen Einheiten und der Zentrale etablieren, um auf ungewöhnliche Bewegungsmuster oder potenzielle Sicherheitsrisiken hinzuweisen. Notfallkommunikation: Bei einer Notsituation könnte das System automatisch eine Verbindung zwischen den Sicherheitskräften vor Ort und der Einsatzleitung herstellen, indem es Live-Videofeeds von mobilen und stationären Kameras teilt.
3. Integrierte städtische Überwachungs- und Reaktionsdienste Smart City Sicherheit: In städtischen Gebieten könnten stationäre Kameras Verbrechen oder Unfälle erkennen und sofort relevante Informationen an mobile Endgeräte von Polizei oder Rettungsdiensten senden. Die Kommunikation wäre vollautomatisiert, einschließlich der Weitergabe von Live-Videos und Standortdaten, um eine schnelle Reaktion zu ermöglichen. Umweltmonitoring:
   Kombinierte Daten von stationären Umweltsensoren und mobilen Einheiten könnten verwendet werden, um Umweltbedingungen wie Luftqualität oder Hochwasserrisiken zu überwachen. Bei Erkennung kritischer Werte könnten automatisch Warnungen an die Einwohner und zuständige Behörden gesendet werden.
4. Gesundheitsüberwachung in der Gemeinschaft-Überwachung von Gesundheitszuständen: Stationäre Kameras in Pflegeheimen oder Krankenhäusern könnten in Verbindung mit mobilen Endgeräten des medizinischen Personals genutzt werden, um Patienten zu überwachen. Bei Erkennung von Anomalien oder Notfällen könnte das System sofort medizinisches Personal alarmieren und ihnen Live-Bilder oder Gesundheitsdaten zur Verfügung stellen.
5. Personalisierte Werbung und Kundenengagement Interaktive Werbedisplays und Kundenfeedback: In Einzelhandelsumgebungen könnten stationäre Kamerasysteme Kundenidentifikation und Verhaltensanalyse durchführen und über mobile Endgeräte personalisierte Angebote oder Informationen an Kunden senden. Das System könnte zudem Feedback von Kunden über mobile Geräte sammeln und sofort an die Geschäftsleitung weiterleiten.

Die Anwendungskonzepte beschreiben Einsatzgebiete bzw. mögliche Merkmale der vorliegenden Erfindung.

Im Folgenden wird das drohnentechnologische Anwendungskonzept beschrieben. Drohnen in Überwachungs- und Inspektionsaufgaben, die automatisch und in Echtzeit Daten und Videos an Steuerzentralen senden. Drohnen, die bei Großveranstaltungen für Sicherheit sorgen, kommunizieren nahtlos miteinander, um verdächtige Aktivitäten zu melden und koordinierte Reaktionen zu ermöglichen. Technischer Ablauf: Drohnen sind mit GPS, Kameras und anderen Sensoren ausgestattet. Sie nutzen Edge-Computing zur Vorverarbeitung der Daten und senden relevante Informationen via 5G an eine zentrale Steuerungsstelle. Kl-Algorithmen analysieren die Daten in Echtzeit, um Entscheidungen zu treffen und Kommunikationskanäle automatisch zwischen Drohnen und der Zentrale oder anderen Drohnen zu etablieren.

Im Folgenden wird das Humanoide Robotik Anwendungskonzept beschrieben. Humanoide Roboter in öffentlichen Einrichtungen oder als Assistenzsysteme, die untereinander und mit Benutzern interagieren, um Hilfestellung zu bieten und Aufgaben zu koordinieren. Technischer Ablauf: Roboter nutzen interne Prozessoren und Kl, um Spracheingaben zu verarbeiten und über WLAN, Bluetooth oder 5G zu kommunizieren. Sie identifizieren Benutzeranfragen und senden Bedarfsdaten an zentrale Server, um weitere Instruktionen oder Unterstützung zu erhalten. Roboter können sich auch untereinander vernetzen, um Aufgaben und Informationen synchronisiert zu verwalten.

Im Folgenden wird das MR/AR-Brillen Anwendungskonzept beschrieben. MR/AR-Brillen, die Touristen oder Besuchern von historischen Stätten oder Museen interaktive und angereicherte Informationen bieten. Technischer Ablauf: Die Brillen erfassen über eingebaute Kameras und Mikrofone die Umgebung und Benutzerinteraktionen.

Informationen werden über Cloud-Server verarbeitet, die zusätzliche Inhalte in Echtzeit an die Brillen zurücksenden. Benutzer erhalten kontextbezogene Informationen und interaktive Elemente direkt in ihrem Sichtfeld.

Ferner kann eine Interaktion von MR/AR-Brille mit einer Drohne und/ oder einem Roboter erfolgen. Einsatz in militärischen Operationen, bei denen Soldaten mit MR/AR-Brillen ausgestattet sind und in Echtzeit taktische Daten von Drohnen und Bodenfahrzeugen erhalten. Technischer Ablauf: MR/AR-Brillen kommunizieren direkt mit Drohnen und robotischen Fahrzeugen, um Lagebilder und Sensorinformationen zu erhalten. Die Informationen werden mittels fortschrittlicher Verschlüsselungstechniken sicher übermittelt. Soldaten können über Sprachbefehle oder Gestensteuerung direkten Einfluss auf die Operationen der Drohnen und Roboter nehmen.

Im Folgenden wird das stationäre Kameras in Consumer- und Tourismus-Anwendungskonzept beschrieben. Stationäre Kameras in Städten oder Touristenattraktionen, die Besuchern über ihre Smartphones oder in Auto-Media-Center kontextbezogene Informationen und Empfehlungen liefern. Technischer Ablauf: Kameras erkennen Annäherungen von Besuchern und erfassen Interessensignale. Daten werden verarbeitet, um personalisierte Inhalte und Empfehlungen über lokale Netzwerke an die Geräte der Nutzer zu senden. Nutzer erhalten interaktive Karten, Informationen und Angebote direkt auf ihre mobilen Endgeräte oder Fahrzeuginnenbildschirme.

Im Folgenden wird das autonomes Fahren Anwendungskonzept beschrieben. Stationäre Kamerasysteme entlang von Straßen, die mit autonomen Fahrzeugen kommunizieren, um Verkehrsfluss und Sicherheit zu verbessern. Technischer Ablauf: Kameras erfassen Verkehrssituationen und analysieren diese mittels Kl. Kritische Informationen werden an Fahrzeuge übermittelt, um sie über Verkehrsbedingungen, Unfälle oder Veränderungen in der Verkehrsführung zu informieren. Autonome Fahrzeuge nutzen diese Daten, um ihre Routen anzupassen, Geschwindigkeiten zu regulieren oder vor möglichen Gefahren zu warnen, was insbesondere in komplexen Verkehrssituationen oder bei schlechten Wetterbedingungen von Vorteil ist.

Im Folgenden wird das AR-Spiele Anwendungskonzept beschrieben. Augmented Reality (AR)-Spiele, die das physische Umfeld des Spielers integrieren und interaktive, ortsbezogene Spielerlebnisse bieten. Technischer Ablauf: Mobile Endgeräte oder AR-Brillen nutzen integrierte Kameras, um die unmittelbare Umgebung des Spielers zu erfassen und zu analysieren. Das Spiel verarbeitet diese Informationen, um Spielinhalte dynamisch an die reale Umgebung anzupassen. Zum Beispiel könnte ein Park zu einer virtuellen Schlachtarena oder einem Rätselraum werden. Spieler interagieren direkt mit der augmentierten Realität, die auf ihren Geräten dargestellt wird, wodurch eine nahtlose Verschmelzung von realer und virtueller Welt entsteht. Die Kommunikation zwischen dem Gerät des Spielers und dem Spiele-Server erfolgt über schnelle, sichere Internetverbindungen, um Latenzzeiten zu minimieren und ein flüssiges Spielerlebnis zu gewährleisten.

In all diesen Szenarien ermöglicht das vollautomatisierte Verfahren zur Herstellung eines Kommunikationskanals eine effiziente, sichere und anpassungsfähige Kommunikation zwischen verschiedenen Technologien und Plattformen. Es optimiert nicht nur die Benutzererfahrung, indem es Echtzeitdaten und -reaktionen bietet, sondern erhöht auch die Sicherheit und Effizienz in komplexen Umgebungen wie dem städtischen Verkehr, militärischen Operationen oder bei der Integration von AR in alltägliche und spielerische Aktivitäten. Durch den Einsatz von KI und maschinellem Lernen kann das System selbstständig Entscheidungen treffen, die auf einer umfassenden Analyse verfügbarer Daten basieren, wodurch es dynamisch auf Veränderungen reagieren und proaktiv agieren kann.

Die Integration eines vollautomatisierten Verfahrens zur Herstellung eines Kommunikationskanals kann auf zwei Arten erfolgen: durch Verarbeitung der Daten direkt auf den Geräten (Edge Computing) oder durch Verarbeitung der Daten über zentrale Server (Cloud Computing). Beide Ansätze haben ihre spezifischen Vorteile und Nachteile, die je nach Anwendungsfall und spezifischen Anforderungen gewichtet werden müssen. Datenverarbeitung auf den Geräten (Edge Computing) Vorteile: Niedrigere Latenz: Da die Daten direkt auf dem Gerät verarbeitet werden, entfallen Verzögerungen, die durch die Übertragung zur und von der Cloud entstehen. Dies ist besonders wichtig für Anwendungen, die Echtzeitreaktionen erfordern, wie autonomes Fahren oder industrielle Automatisierung. Datenschutz: Sensible Daten müssen das Gerät nicht verlassen, was das Risiko von Datenschutzverletzungen reduziert und besonders in Regionen mit strengen Datenschutzgesetzen vorteilhaft ist. Betrieb bei Netzwerkausfall: Geräte können autonom weiterarbeiten, auch wenn keine Verbindung zu einem zentralen Server besteht. Dies erhöht die Zuverlässigkeit des Systems unter verschiedenen Bedingungen.

Erweiterte Rechenkapazitäten: Die Cloud bietet nahezu unbegrenzte Rechenkapazitäten und Speicherplatz, was komplexere Analysen und KI-gestützte Verfahren ermöglicht, die auf den Geräten selbst nicht möglich wären.

Zentralisierte Wartung: Software-Updates und Wartung können zentral verwaltet werden, was die Konsistenz und Effizienz der Systemaktualisierungen verbessert. Skalierbarkeit: Die Cloud-Infrastruktur kann leicht skaliert werden, um den steigenden Datenmengen und Rechenanforderungen gerecht zu werden, ohne dass eine physische Erweiterung der Gerätebasis erforderlich ist.

Die Wahl zwischen Edge- und Cloud-Computing hängt stark von den spezifischen Anforderungen des vollautomatisierten Verfahrens zur Herstellung eines Kommunikationskanals ab. Für Echtzeitanwendungen und Anwendungen, bei denen Datenschutz von höchster Priorität ist, könnte Edge Computing die bessere Wahl sein. Für Anwendungen, die eine hohe Rechenleistung und komplexe Datenanalysen erfordern, bietet Cloud Computing deutliche Vorteile. In vielen Fällen könnte auch eine hybride Lösung sinnvoll sein, bei der einige Verarbeitungsaufgaben lokal auf den Geräten und andere in der Cloud ausgeführt werden, um die Vorteile beider Ansätze zu kombinieren. Auch ist denkbar, das Verfahren hybrid, heißt ein Teil semi-automatisiert und einen Teil vollautomatisiert in den Anwendungen umzusetzen.

Die Aufgabe wird auch gelöst durch eine Systemanordnung zum vollautomatisierten Herstellen mindestens eines Kommunikationskanals zu mindestens einem mobilen Endgerät, aufweisend Ausleseeinheiten eingerichtet zum stetigen Auslesen bildgebender Sensoren zum Erfassen einer Mehrzahl potentieller Kommunikationspartner, wobei die bildgebenden Sensoren jeweils von einer Mehrzahl von mobilen Endgeräten und einer Mehrzahl von stationären Endgeräten betrieben werden; mindestens eine Analyseeinheit eingerichtet zum Identifizieren mindestens eines abgespeicherten Verhaltensmusters mindestens eines potentiellen Kommunikationspartners mittels des stetigen Auslesens der bildgebenden Sensoren; und eine Kommunikationseinheit eingerichtet zum Herstellen jeweils eines Kommunikationskanals zu mindestens einem bestimmten Kommunikationspartner, falls das jeweils identifizierte Verhaltensmuster dieses Kommunikationspartners einem vorab definierten Verhaltensmuster entspricht.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens zum vollautomatisierten Herstellen mindestens eines Kommunikationskanals gemäß einem Aspekt der vorliegenden Erfindung;
- Figur 2:: ein weiteres schematisches Ablaufdiagramm des vorgeschlagenen Verfahrens zum vollautomatisierten Herstellen mindestens eines Kommunikationskanals gemäß einem weiteren Aspekt der vorliegenden Erfindung;
- Figur 3:: ein weiteres schematisches Ablaufdiagramm des vorgeschlagenen Verfahrens zum vollautomatisierten Herstellen mindestens eines Kommunikationskanals gemäß einem weiteren Aspekt der vorliegenden Erfindung; und
- Figur 4:: ein schematisches Sequenzdiagramm des vorgeschlagenen Verfahrens zum vollautomatisierten Herstellen mindestens eines Kommunikationskanals gemäß einem weiteren Aspekt der vorliegenden Erfindung.

Die vorliegenden Figuren weisen teilweise Parameter auf, welche dem Fachmann in der englischen Bezeichnung so geläufig sind und welche als Parameter verwendet werden und so nicht zu übersetzen sind.

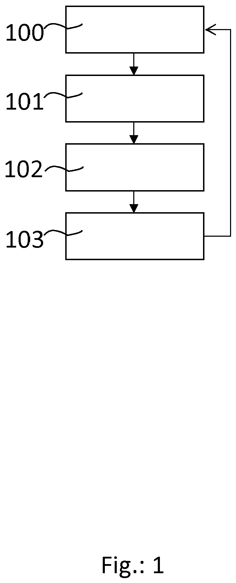

Figur 1 zeigt in einem schematischen Ablaufdiagramm ein Verfahren zum vollautomatisierten Herstellen mindestens eines Kommunikationskanals zu mindestens einem mobilen Endgerät, aufweisend ein stetiges Auslesen 100 bildgebender Sensoren zum Erfassen 101 einer Mehrzahl potentieller Kommunikationspartner, wobei die bildgebenden Sensoren jeweils von einer Mehrzahl von mobilen Endgeräten und einer Mehrzahl von stationären Endgeräten betrieben werden; ein Identifizieren 102 mindestens eines abgespeicherten Verhaltensmusters mindestens eines potentiellen Kommunikationspartners mittels des stetigen Auslesens 100 der bildgebenden Sensoren; und ein Herstellen 103 jeweils eines Kommunikationskanals zu mindestens einem bestimmten Kommunikationspartner, falls das jeweils identifizierte 102 Verhaltensmuster dieses Kommunikationspartners einem vorab definierten Verhaltensmuster entspricht.

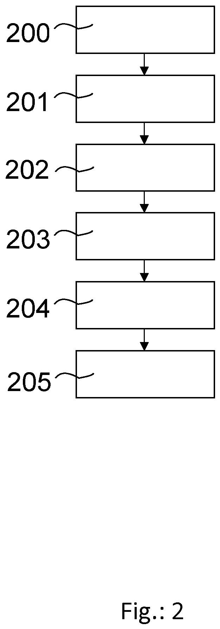

Figur 2 zeigt ein weiteres schematisches Ablaufdiagramm des vorgeschlagenen Verfahrens zum verteilten und kooperativen Problemlösen gemäß einem weiteren Aspekt der vorliegenden Erfindung. Die einzelnen Verfahrensschritte werden wie folgt beschrieben:
Verfahrensschritt 200: ein optisches Erfassen der aktuellen Situation durch einen oder mehrere Sensoren;
Verfahrensschritt 201: eine Signalverarbeitung nachdem alle Daten gesichtet wurden anhand von maschinellem Lernen bzw. künstlicher Intelligenz;
Verfahrensschritt 202: es erfolgt eine Datenanalyse und ein Identifizieren potentieller Kommunikationspartner;
Verfahrensschritt 203: es wird aufgrund der Daten die Verfügbarkeit und die Kompatibilität der potentiellen Kommunikationspartner zur Herstellung des Kommunikationskanals bewertet;
Verfahrensschritt 204: mindestens ein geeigneter Kommunikationskanal wird ausgewählt; und
Verfahrensschritt 205: mindestens ein Kommunikationskanal wird hergestellt.

Die Verfahrensschritte können auch jeweils oder gruppiert iteriert durchgeführt werden. Der Fachmann weiß wie künstliche Intelligenz eingesetzt werden kann. Somit muss dies hier nicht ausgeführt werden, da Kl an sich in der vorliegenden Erfindung nicht fortgebildet wird. Der Fachmann würde auf bestehende Implementierungen bzw. neuronale Netze zurückgreifen.

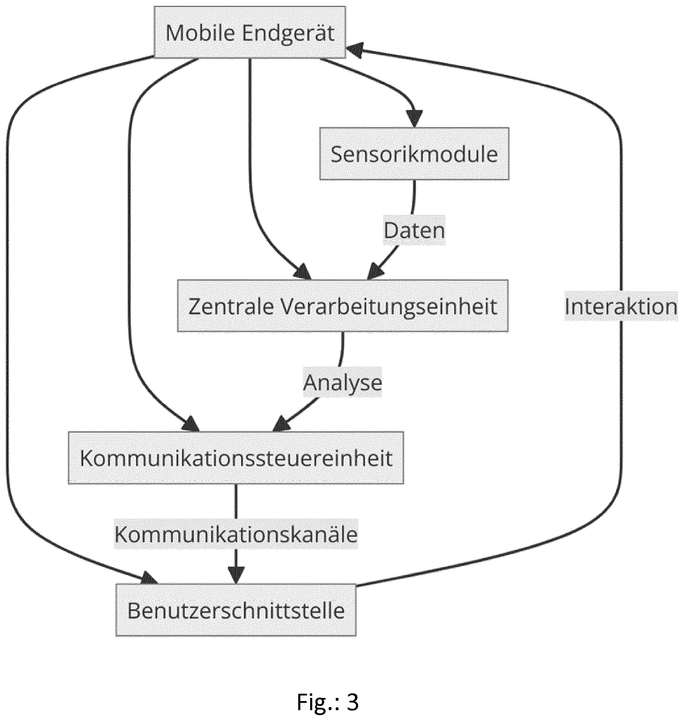

Figur 3 zeigt die verwendeten Komponenten und deren Interaktion. Oben sind die mobilen Endgeräte angeordnet, welche mit einer zentralen Verarbeitungseinheit kommunizieren. Darüber hinaus ist unten eine Kommunikationssteuereinheit und optional eine Benutzerschnittstelle eingezeichnet. Die Benutzerschnittstelle ist optional, da das Verfahren vollautomatisiert ausgeführt werden kann.

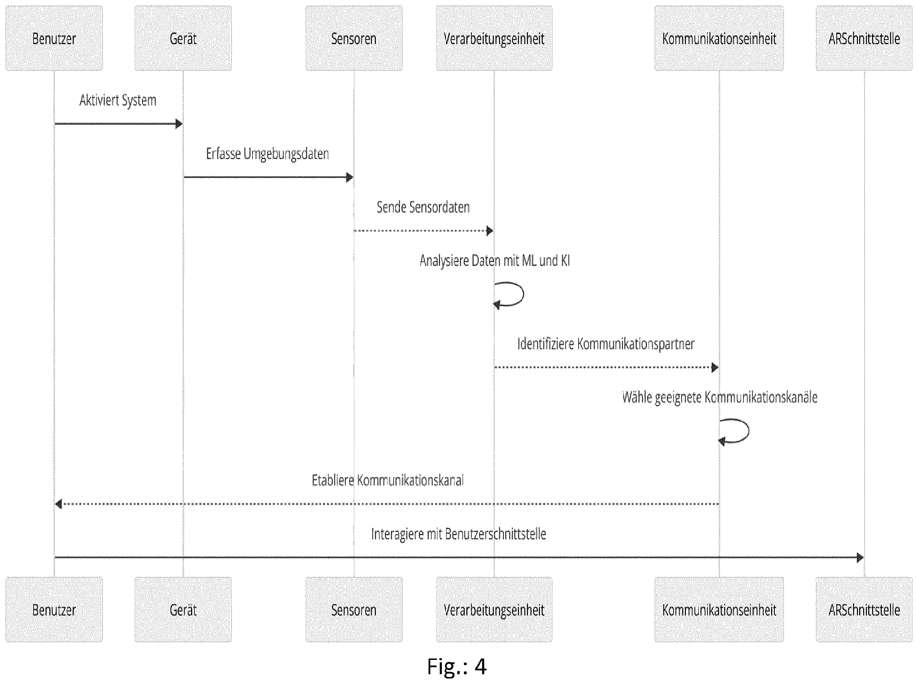

Figur 4 zeigt in einer Detailansicht das vorgeschlagen Verfahren bzw. die vorgeschlagene Systemanordnung. Der Benutzer auf der linken Seite ist optional bzw. kann auch maschinell vorliegen. Bei den Kommunikationseinheiten handelt es sich um die Endgeräte. Die Verarbeitungseinheit kann zentral und/ oder dezentral ausgestaltet sein. Das heißt es kann ein zentraler Server Aufgaben übernehmen und weitere Endgeräte können Teilaufgaben übernehmen.

Die vollautomatisierte Version des Verfahrens zur Herstellung eines Kommunikationskanals ermöglicht eine effiziente und benutzerfreundliche Verbindung von Geräten, ohne dass eine manuelle Benutzereingabe erforderlich ist. Um dies zu realisieren, kann das System in der Lage sein, selbstständig geeignete Kommunikationspartner zu erkennen, zu authentifizieren und sich mit diesen zu verbinden. Hier sind die Schlüsselkomponenten und Techniken, die in diesem Prozess eingesetzt werden können:
1. Erkennung potenzieller Kommunikationspartner; Sensoren und Kameras: Geräte nutzen eingebaute Sensoren und Kameras, um andere Geräte in ihrer Umgebung zu erkennen. Dies kann durch optische Erkennung, z.B. RFID, NFC oder andere Nahfeldkommunikationstechnologien erfolgen. Beacons und Bluetooth Low Energy (BLE): Geräte können auch BLE-Beacons verwenden, um ihre Anwesenheit zu signalisieren und von anderen Geräten in der Nähe entdeckt zu werden.
2. Bereitstellung und Nutzung von Registrierungsinformationen Registrierungsdatenbank: Jedes Gerät könnte über eine eindeutige Kennung verfügen, die in einer zentralen oder dezentralen Registrierungsdatenbank gespeichert ist. Diese Datenbank kann auch die Kommunikationspräferenzen, Geräteeigenschaften und Sicherheitszertifikate enthalten. Automatischer Austausch von Registrierungsinformationen: Sobald Geräte einander erkennen, können sie ihre Registrierungsinformationen automatisch austauschen. Dies kann über gesicherte Kommunikationskanäle erfolgen, um Datenschutz und Sicherheit zu gewährleisten.
3. Authentifizierung und Sicherheitsüberprüfung, Kryptographische Verfahren: Zur Authentifizierung können kryptographische Methoden eingesetzt werden, um sicherzustellen, dass die Kommunikation zwischen den Geräten authentisch und von vertrauenswürdigen Quellen stammt. Blockchain-Technologie: Für eine erhöhte Sicherheit und um Manipulationen zu vermeiden, kann die Authentifizierung und Registrierung über eine Blockchain erfolgen. Dies stellt sicher, dass einmal gespeicherte Informationen nicht rückwirkend verändert werden können.
4. Automatische Konfiguration des Kommunikationskanals, KI-gesteuerte Netzwerkauswahl:
   Ein KI-Algorithmus wählt basierend auf den verfügbaren Netzwerken und den Anforderungen der Kommunikation den optimalen Kanal aus. Dies kann Wi-Fi, LTE, 5G oder zukünftige drahtlose Technologien umfassen. Dynamische Anpassung: Das System kann seine Konfigurationen basierend auf der Netzwerkauslastung, den Energiebedingungen der Geräte und anderen Umgebungsfaktoren dynamisch anpassen.
5. Automatisierte Verbindungsaufnahme und Initiierung der Kommunikation: Sobald die Authentifizierung erfolgreich ist und die Kommunikationskanäle konfiguriert sind, initiieren die Geräte automatisch eine Verbindung, ohne dass der Benutzer eingreifen muss. Feedback-Systeme: Um die Benutzererfahrung kontinuierlich zu verbessern, können Feedback-Systeme implementiert werden, die die Qualität der Kommunikationsverbindung überwachen und bei Bedarf Anpassungen vornehmen. Technische Umsetzung: Die technische Umsetzung eines solchen Systems erfordert eine robuste Infrastruktur für Datenmanagement und Sicherheit, leistungsstarke Algorithmen für maschinelles Lernen zur Entscheidungsfindung und eine zuverlässige Implementierung von loT-Kommunikationstechnologien. Der Vorteil besteht darin, eine nahtlose Integration zwischen unterschiedlichen Geräten und Plattformen zu gewährleisten und gleichzeitig hohe Standards bei Datenschutz und Sicherheit zu gewährleisten.

Im Folgenden werden weitere vorteilhafte Merkmale der vorliegenden Erfindung beschrieben:
1. Erkennung und Identifizierung und technischer Ablauf: Kameraeinsatz: Kameras an den Geräten erfassen kontinuierlich das Sichtfeld. Diese Kameras können hochauflösende optische Sensoren sein, die in der Lage sind, andere Geräte und Objekte auch über größere Distanzen zu erkennen. Bildverarbeitung: Die von den Kameras aufgenommenen Bilder werden mittels Bildverarbeitungsalgorithmen analysiert. Hier kommen Techniken der Objekterkennung zum Einsatz, die es ermöglichen, Geräte von anderen Objekten im Sichtfeld zu unterscheiden. Technische Wirkungsweise: Einsatz von Deep Learning: Moderne Deep-Learning-Modelle, speziell trainiert auf die Erkennung bestimmter Geräteformen oder -signaturen, analysieren die Bilder. Die Modelle können auch darauf trainiert werden, spezifische Merkmale oder Codes zu erkennen, die auf den Geräten angebracht sind, wie z. B. QR-Codes oder spezielle Markierungen.
2. Distanzmessung und Kommunikationseinstellung, technischer Ablauf:
   Distanzbestimmung: Sobald ein Gerät erkannt wird, schätzt das System die Distanz zum Gerät basierend auf bekannten Größenverhältnissen und Fokuseinstellungen der Kamera. Kommunikationskanalauswahl: Abhängig von der geschätzten Distanz wählt das System den geeignetsten Kommunikationskanal. Für kürzere Distanzen könnte Bluetooth oder Wi-Fi Direct verwendet werden, während für größere Distanzen leistungsfähigere RF-Kommunikationstechnologien wie LoRa oder sogar gerichtete Mikrowellenkommunikation zum Einsatz kommen können. Technische Wirkungsweise: Adaptive Signalverarbeitung:
   Das System passt die Signalstärke und -frequenz dynamisch an die Distanz und mögliche Interferenzen an. Dies wird durch fortschrittliche Algorithmen ermöglicht, die die Umgebungsbedingungen und die Signalqualität kontinuierlich überwachen.
3. Verbindungsaufbau und Datenübertragung, technischer Ablauf: Initiierung der Kommunikation: Nach erfolgreicher Distanzmessung und Kanalauswahl initiieren die Geräte automatisch eine Verbindung. Handshake-Protokoll: Ein spezielles Protokoll wird verwendet, um die Verbindung zu sichern und zu authentifizieren. Dies kann durch den Austausch von Einmal-Schlüsseln oder durch Verfahren der Public-Key-Infrastruktur erfolgen. Technische Wirkungsweise: Verschlüsselte Datenübertragung: Die übertragenen Daten werden mittels starker Verschlüsselung gesichert, um Datenschutz und Sicherheit zu gewährleisten. Die Verschlüsselungsschlüssel werden für jede Verbindung neu generiert, was das Risiko von Sicherheitsverletzungen minimiert.
4. Wartung der Verbindung, technischer Ablauf: Überwachung der Verbindungsqualität: Das System überwacht kontinuierlich die Qualität der Kommunikationsverbindung. Bei Verschlechterung der Signalqualität oder anderen Problemen werden automatisch Anpassungen vorgenommen. Dynamische Anpassungen: Bei Bedarf kann das System automatisch auf einen anderen Kommunikationskanal umschalten oder die Übertragungsparameter anpassen, um die Verbindungsstabilität und -qualität zu verbessern. Technische Wirkungsweise: Selbstheilende Netzwerkfunktionen: Das System verfügt über Mechanismen, die es ermöglichen, automatisch Probleme zu erkennen und zu korrigieren, um eine kontinuierliche und zuverlässige Kommunikation zu gewährleisten. Dies beinhaltet das automatische Wiederherstellen von Verbindungen nach Unterbrechungen und das Routing von Daten über alternative Pfade, falls die Hauptverbindung ausfällt.

Zusammenfassung der technischen Umsetzung: Die vollautomatisierte Version des Verfahrens zur Herstellung eines Kommunikationskanals nutzt eine Kombination aus moderner Bilderkennung, maschinellem Lernen, adaptiven Kommunikationstechnologien und fortschrittlichen Sicherheitsprotokollen, um eine effiziente und sichere Verbindung zwischen Geräten zu ermöglichen. Diese Technologien ermöglichen es dem System, ohne menschliche Eingabe zu operieren, was besonders in Anwendungen nützlich ist, wo Schnelligkeit und Effizienz entscheidend sind. Indem die Geräte ihre Umgebung intelligent wahrnehmen und auf Basis dieser Informationen handeln, kann das System flexibel auf Veränderungen reagieren und eine optimale Kommunikationsleistung bieten.

Alternative Ansätze und Technologien, die für die Implementierung eines vollautomatisierten Verfahrens zur Herstellung von Kommunikationskanälen verwendet werden können. Diese Aspekte der Kommunikationstechnologie und Systemarchitektur können erfindungsgemäß verwendet werden und je nach spezifischen Anforderungen und Umgebungsbedingungen Vorteile bieten.
1. Verwendung von Machine-to-Machine (M2M) Protokollen. Ansatz: Statt sich auf komplexe KI-basierte Systeme zu verlassen, kann das System speziell entwickelte M2M-Kommunikationsprotokolle nutzen, die für Effizienz und Zuverlässigkeit in loT-Umgebungen optimiert sind. Vorteile: Diese Protokolle sind oft weniger ressourcenintensiv und für die Integration in eine Vielzahl von Geräten geeignet. Implementierung: Einsatz von Industriestandards wie MQTT oder CoAP, die für geringe Bandbreite und hohe Latenzsensibilität entwickelt wurden.
2. Blockchain-basierte Geräteauthentifizierung und -kommunikation. Ansatz: Nutzung der Blockchain-Technologie nicht nur für Sicherheitszwecke, sondern auch zur Verwaltung der Kommunikationsprotokolle zwischen Geräten. Vorteile: Höhere Sicherheit und Unveränderlichkeit der Kommunikationsregeln sowie verbesserte Transparenz bei den Transaktionen zwischen den Geräten. Implementierung: Entwicklung eines dezentralen Netzwerks, in dem jedes Gerät als ein Node agiert, der Transaktionen validiert und kommuniziert.
3. Einsatz von dedizierten Short-Range Communication (SRC) Technologien. Ansatz:
   Verwendung von dedizierten Kurzstreckenkommunikationstechnologien wie Zigbee oder Z-Wave, die speziell für die Automatisierungsumgebungen entwickelt wurden. Vorteile:
   Reduziert die Komplexität der Einrichtung und Wartung von Kommunikationskanälen, besonders in Umgebungen mit vielen kleinen, vernetzten Geräten. Implementierung: Aufbau eines lokalen Netzwerks von Geräten, die über SRC miteinander kommunizieren, wobei jedes Gerät spezifische Rollen innerhalb des Netzwerks erhält.
4. Verwendung von Software-Defined Networking (SDN)Ansatz: Einsatz von SDN-Technologien zur dynamischen Verwaltung von Netzwerkressourcen und Kommunikationswegen. Vorteile: Höhere Flexibilität und Skalierbarkeit der Netzwerkinfrastruktur, ermöglicht das dynamische Anpassen von Netzwerkpfaden und - ressourcen basierend auf Echtzeitdaten. Implementierung: Integration von SDN-Controllern in die Netzwerkinfrastruktur, die die Verteilung von Datenströmen überwachen und steuern.
5. Advanced Edge Computing. Ansatz: Erweiterte Nutzung von Edge Computing zur Verarbeitung von Daten direkt am Entstehungsort, um Latenzzeiten zu minimieren und die Netzwerkbelastung zu reduzieren. Vorteile: Schnellere Reaktionszeiten und geringere Abhängigkeit von zentralen Servern, was besonders in kritischen Anwendungen wie dem autonomen Fahren oder der industriellen Automatisierung wichtig ist. Implementierung:
   Einrichtung von leistungsstarken Edge-Computing-Einheiten, die lokale Datenanalysen und Entscheidungsfindungen durchführen können.

Im Folgenden werden weitere Aspekte der Erfindung beschrieben:
1. Kognitive Netzwerke. Ansatz: Einsatz kognitiver Netzwerktechnologien, die maschinelles Lernen und Kl nutzen, um das Netzwerkverhalten dynamisch zu analysieren und zu optimieren. Vorteile: Diese Netzwerke können sich automatisch an veränderliche Umgebungsbedingungen und Netzwerkanforderungen anpassen, was die Effizienz und Zuverlässigkeit der Kommunikation verbessert. Implementierung: Einrichtung eines selbstverwaltenden Netzwerks, das Frequenzen, Routen und Ressourcen basierend auf Echtzeit-Datenverkehrsanalysen optimiert.
2. Quantum Key Distribution (QKD)Ansatz: Nutzung von Quantenkryptografie, speziell der Quantum Key Distribution, zur sicheren Kommunikation zwischen den Geräten. Vorteile:
   QKD bietet eine nahezu unknackbare Verschlüsselung, was die Sicherheit in kritischen Anwendungen wie militärischen oder staatlichen Kommunikationsnetzen erheblich verbessert. Implementierung: Integration von QKD-Systemen in die Kommunikationsinfrastruktur, um sichere Schlüsselaustauschmechanismen zwischen den Geräten zu ermöglichen.
3. Li-Fi (Light Fidelity). Ansatz: Nutzung von Li-Fi für die Datenübertragung über Lichtwellen, besonders in Umgebungen, wo traditionelle Funkkommunikation problematisch ist. Vorteile:
   Li-Fi ist ideal für hochsichere Bereiche, da Lichtwellen nicht durch Wände dringen können, was die Sicherheit der Datenübertragung verbessert. Implementierung: Einrichtung von Li-Fi-Hotspots und entsprechenden Empfängern in Geräten, um eine schnelle und sichere Kommunikation zu ermöglichen.
4. Network Slicing in 5G NetzwerkenAnsatz: Nutzung von Network Slicing in 5G-Netzwerken, um virtuelle Netzwerke mit spezifischen Qualitäts- und Leistungsparametern für verschiedene Anwendungsfälle zu erstellen. Vorteile: Ermöglicht die maßgeschneiderte Konfiguration von Netzwerkressourcen für unterschiedliche Anwendungen, was die Effizienz und Performance verbessert. Implementierung: Einrichtung verschiedener "Slices" für unterschiedliche Dienste wie autonomes Fahren, loT-Geräte oder Notfalldienste, um optimale Leistung und Zuverlässigkeit zu gewährleisten.
5. Hybrid Cloud Solutions. Ansatz: Kombination von öffentlichen und privaten Cloud-Lösungen zur Datenverarbeitung und -speicherung, um Flexibilität und Skalierbarkeit zu maximieren. Vorteile: Hybrid Clouds bieten sowohl die Sicherheit privater Clouds als auch die Ressourcen und Skalierbarkeit öffentlicher Clouds. Implementierung: Einrichtung einer Hybrid-Cloud-Infrastruktur, die es ermöglicht, sensible Daten privat zu halten, während weniger kritische Daten und Ressourcen in der öffentlichen Cloud verarbeitet werden.

Diese Technologien und Ansätze eröffnen erfindungsgemäß neue Möglichkeiten für die Gestaltung von Kommunikationsnetzwerken, die flexibel, sicher und effizient sind. Sie bieten jeweils spezifische Vorteile, die für bestimmte Einsatzszenarien oder Anforderungen besonders geeignet sind, und können in Kombination ein leistungsstarkes, adaptives und sichereres Kommunikationsnetzwerk schaffen.

Im Folgenden werden weitere Aspekte der Erfindung beschrieben:
1. Intelligente Antennensysteme (Smart Antennas). Ansatz: Verwendung von intelligenten Antennensystemen, die Beamforming-Techniken nutzen, um die Signalrichtung dynamisch anzupassen und so die Kommunikationsqualität und -reichweite zu optimieren. Vorteile:
   Diese Technologie kann die Netzwerkeffizienz verbessern, indem sie Interferenzen reduziert und die Signalstärke in gewünschte Richtungen erhöht. Implementierung: Installation von intelligenten Antennensystemen in mobilen und stationären Geräten, die sich automatisch auf die beste verfügbare Signalquelle ausrichten.
2. Enhanced Mobile Broadband (eMBB)Ansatz: Nutzung des eMBB im Rahmen von 5G, um extrem hohe Datenraten für multimediale Anwendungen zu ermöglichen, was insbesondere für AR/VR-Anwendungen nützlich ist. Vorteile: eMBB bietet die notwendige Bandbreite und Geschwindigkeit, um hochauflösende Videoströme und andere datenintensive Anwendungen zu unterstützen. Implementierung: Einrichtung von 5G-Netzwerken mit eMBB-Fähigkeit, um eine nahtlose und schnelle Datenübertragung für anspruchsvolle Anwendungen zu gewährleisten.
3. Vehicular Communication Systems. Ansatz: Entwicklung von Kommunikationssystemen speziell für Fahrzeuge (Vehicle-to-Everything, V2X), die es ermöglichen, Informationen zwischen Fahrzeugen sowie zwischen Fahrzeugen und Infrastruktur auszutauschen. Vorteile: Verbessert die Verkehrssicherheit und Effizienz durch den Austausch von Echtzeit-Verkehrsinformationen und Warnungen. Implementierung: Integration von V2X-Kommunikationsmodulen in Fahrzeuge und Verkehrsinfrastruktur, die kontinuierlich Daten austauschen.
4. Advanced Positioning Systems. Ansatz: Einsatz fortschrittlicher Ortungssysteme, die über GPS hinausgehen, um eine präzisere Lokalisierung und Kontextualisierung in städtischen oder dicht bebauten Umgebungen zu ermöglichen. Vorteile: Ermöglicht eine genauere und zuverlässigere Standortbestimmung, was für viele Anwendungen kritisch ist, insbesondere in Bereichen wie autonomes Fahren oder bei der Notfallreaktion. Implementierung: Nutzung von Multi-Sensor-Fusionsverfahren, die Daten von GPS, IMUs, optischen Sensoren und anderen Quellen kombinieren, um die Genauigkeit zu erhöhen.
5. Satellite Communication Integration. Ansatz: Integration von Satellitenkommunikationstechnologien, um eine globale Abdeckung und Kommunikationsfähigkeit in abgelegenen oder schwer zugänglichen Gebieten zu gewährleisten. Vorteile: Bietet eine zuverlässige Kommunikationsmöglichkeit unabhängig von terrestrischen Netzwerkinfrastrukturen, was besonders für globale oder maritime Anwendungen wichtig ist. Implementierung: Einsatz von Geräten mit Satellitenkommunikationsfähigkeit und die Einrichtung entsprechender Dienste, um eine breite und beständige Netzabdeckung sicherzustellen. Jeder dieser Ansätze kann auf unterschiedliche Weise genutzt werden, um die Effektivität und Effizienz der Kommunikation in einem vollautomatisierten System zu verbessern. Die Auswahl der geeigneten Technologie hängt von den spezifischen Anforderungen des Einsatzgebietes, der erforderlichen Reichweite, Geschwindigkeit, Genauigkeit und vielen anderen Faktoren ab.

Im Folgenden werden weitere Aspekte der Erfindung beschrieben:
1. Adaptive Communication Environment (ACE). Ansatz: Entwicklung einer adaptiven Kommunikationsumgebung, die automatisch die beste Kommunikationsmethode basierend auf den aktuellen Umgebungsbedingungen und Systemanforderungen auswählt. Vorteile:
   Flexibilität und Effizienz in wechselnden Netzwerken und bei unterschiedlichen Kommunikationsbedarfen. Implementierung: Einsatz von Software-Defined Networking (SDN) und Network Function Virtualization (NFV) zur dynamischen Anpassung der Netzwerkeinstellungen und Kommunikationswege.
2. Integration von Ultra-Reliable Low-Latency Communication (URLLC)Ansatz: Nutzung von URLLC innerhalb von 5G Netzwerken, um extrem zuverlässige und latenzarme Kommunikation für kritische Anwendungen wie medizinische Fernbetreuung oder industrielle Automation zu ermöglichen. Vorteile: Höchste Zuverlässigkeit und minimale Verzögerungen, die für die Sicherheit und Effizienz von kritischen Operationen erforderlich sind. Implementierung: Implementierung von 5G Netzwerkarchitekturen, die speziell auf URLLC ausgelegt sind, um die strengen Anforderungen dieser Anwendungen zu erfüllen.
3. Nutzung von Künstlicher Intelligenz zur Netzwerkoptimierung. Ansatz: Einsatz von Kl-Algorithmen zur Vorhersage von Netzwerkauslastungen und zur proaktiven Anpassung von Netzwerkressourcen, um Engpässe zu vermeiden und die Kommunikationseffizienz zu maximieren. Vorteile: Verbesserte Netzwerkmanagementeffizienz und optimierte Ressourcennutzung. Implementierung: Integration von Ki-basierten Analysetools, die Echtzeitdaten aus dem Netzwerk sammeln und verarbeiten, um Vorhersagen zu treffen und automatische Anpassungen vorzunehmen.
4. Entwicklung autonomer Kommunikations-Agenten. Ansatz: Schaffung autonomer Software-Agenten, die in der Lage sind, selbstständig mit anderen Geräten zu kommunizieren und komplexe Aufgaben wie die Einrichtung und Wartung von Kommunikationskanälen zu übernehmen. Vorteile: Reduzierung der menschlichen Intervention und Steigerung der Effizienz durch automatisierte Prozesse. Implementierung: Programmierung von intelligenten Agenten, die spezifische Kommunikationsprotokolle und - strategien verstehen und selbstständig umsetzen können.
5. Anwendung von Cross-Layer Design. Ansatz: Ein cross-layer Design-Ansatz, bei dem Informationen zwischen verschiedenen Schichten des Kommunikationsprotokollstacks ausgetauscht werden, um die Leistung zu optimieren. Vorteile: Verbesserte Netzwerkleistung durch eine ganzheitliche Betrachtung und Anpassung von Netzwerkparametern über mehrere Schichten hinweg. Implementierung: Entwicklung von Netzwerkprotokollen, die den Informationsaustausch zwischen Schichten wie der physikalischen Schicht, der MAC-Schicht und der Netzwerkschicht ermöglichen.

5G Netzwerke können erfindungsgemäß eingesetzt werden und bieten extrem schnelle Datenübertragung und geringe Latenzzeiten, ideal für Echtzeitkommunikation und datenintensive Anwendungen. Unterstützung für Network Slicing, was verschiedene Anforderungen verschiedener Anwendungen innerhalb desselben Netzwerks ermöglicht. Edge Computing Verarbeitung von Daten am Rand des Netzwerks kann erfindungsgemäß eingesetzt werden, nahe am Ort der Datengenerierung, um Latenz zu minimieren und Bandbreitenverbrauch zu reduzieren. Dies erhöht die Effizienz und Reaktionsgeschwindigkeit in Anwendungen, die schnelle Verarbeitung erfordern, wie autonomes Fahren oder Smart Cities. Internet der Dinge (loT) Technologien ermöglichen eine breite Vernetzung von Geräten, was die Grundlage für automatisierte Kommunikationsprozesse schafft. Sensorik und Aktorik in Geräten ermöglichen eine direkte Datenerfassung und -aktion ohne menschliches Zutun. KI und maschinelles Lernen-Algorithmen zur Analyse von Datenströmen und zur Entscheidungsfindung in Echtzeit. Kl kann Netzwerkmanagement optimieren, Sicherheitsprotokolle verstärken und personalisierte Kommunikationserlebnisse bieten.

## Patentansprüche

1. Verfahren zum vollautomatisierten Herstellen mindestens eines Kommunikationskanals zu mindestens einem mobilen Endgerät, aufweisend:
- ein stetiges Auslesen (100) bildgebender Sensoren zum Erfassen (101) einer Mehrzahl potentieller Kommunikationspartner, wobei die bildgebenden Sensoren jeweils von einer Mehrzahl von mobilen Endgeräten und einer Mehrzahl von stationären Endgeräten betrieben werden;
- ein Identifizieren (102) mindestens eines abgespeicherten Verhaltensmusters mindestens eines potentiellen Kommunikationspartners mittels des stetigen Auslesens (100) der bildgebenden Sensoren; und
- ein Herstellen (103) jeweils eines Kommunikationskanals zu mindestens einem bestimmten Kommunikationspartner, falls das jeweils identifizierte (102) Verhaltensmuster dieses Kommunikationspartners einem vorab definierten Verhaltensmuster entspricht.

2. Verfahren nach Anspruch 1, **dadurch gekennzeichnet, dass** die Verhaltensmuster in Abhängigkeit von Sensorperspektiven identifiziert werden.

3. Verfahren nach Anspruch 1 oder 2, **dadurch gekennzeichnet, dass** die Verhaltensmuster in Abhängigkeit von Sensorperspektiven mindestens eines mobilen Endgeräts und mindestens eines stationären Endgeräts identifiziert werden.

4. Verfahren nach einem der vorhergehenden Ansprüche, **dadurch gekennzeichnet, dass** eine Brennweite mindestens eines bildgebenden Sensors in Abhängigkeit einer Sensorauflösung und/ oder einer identifizierten Anzahl von Kommunikationspartner eingestellt wird.

5. Verfahren nach einem der vorhergehenden Ansprüche, **dadurch gekennzeichnet, dass** eine Auflösung eines ersten Sensors ausgelesen wird und bei Abweichen eines abgespeicherten Sollwerts alternativ oder additiv ein zweiter Sensor verwendet wird.

6. Verfahren nach einem der vorhergehenden Ansprüche, **dadurch gekennzeichnet, dass** die Verhaltensmuster in Abhängigkeit mehrerer bildgebender Sensoren, mindestens eines Ortssensors, mindestens eines Luftdrucksensors und/ oder eines Umgebungssensors analysiert wird.

7. Verfahren nach einem der vorhergehenden Ansprüche, **dadurch gekennzeichnet, dass** ein Verhaltensmuster eine abgespeicherte Trajektorie, eine Geschwindigkeit, eine Bewegung mindestens einer Komponente, eine Aktion mindestens einer Komponente, eine Geschwindigkeitsveränderung, eine Höhenveränderung, eine Lageveränderung, ein elektrisches Signal, eine physische Veränderung mindestens einer Komponente und/ oder eine Verhaltensinformation umfasst.

8. Verfahren nach einem der vorhergehenden Ansprüche, **dadurch gekennzeichnet, dass** in Abhängigkeit eines identifizierten Verhaltensmusters eine Kommunikationskanal ausgewählt wird.

9. Verfahren nach einem der vorhergehenden Ansprüche, **dadurch gekennzeichnet, dass** vorab mindestens ein Kommunikationskanal abgespeichert wird, der mittels einer Sendeeinheit mit dem mindestens einen potentiellen Kommunikationspartner hergestellt wird.

10. Verfahren nach einem der vorhergehenden Ansprüche, **dadurch gekennzeichnet, dass** mehrere Verhaltensmuster in ihrer Gesamtheit identifiziert werden.

11. Verfahren nach einem der vorhergehenden Ansprüche, **dadurch gekennzeichnet, dass** die Kommunikationspartner als mobile Endgeräte vorliegen.

12. Verfahren nach einem der vorhergehenden Ansprüche, **dadurch gekennzeichnet, dass** jedes mobile Endgerät und jedes stationäre Endgerät jeweils mindestens einen Sensor betreibt.

13. Systemanordnung zum vollautomatisierten Herstellen mindestens eines Kommunikationskanals zu mindestens einem mobilen Endgerät, aufweisend:
- Ausleseeinheiten eingerichtet zum stetigen Auslesen (100) bildgebender Sensoren zum Erfassen (101) einer Mehrzahl potentieller Kommunikationspartner, wobei die bildgebenden Sensoren jeweils von einer Mehrzahl von mobilen Endgeräten und einer Mehrzahl von stationären Endgeräten betrieben werden;
- mindestens eine Analyseeinheit eingerichtet zum Identifizieren (102) mindestens eines abgespeicherten Verhaltensmusters mindestens eines potentiellen Kommunikationspartners mittels des stetigen Auslesens (100) der bildgebenden Sensoren; und
- eine Kommunikationseinheit eingerichtet zum Herstellen (103) jeweils eines Kommunikationskanals zu mindestens einem bestimmten Kommunikationspartner, falls das jeweils identifizierte (102) Verhaltensmuster dieses Kommunikationspartners einem vorab definierten Verhaltensmuster entspricht.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
